# EUROPEAN PATENT SPECIFICATION

(11) **EP 3 250 082 B1**
(45) Date of publication and mention of the grant of the patent: **30.06.2021**
(21) Application number: 15880616.6
(22) Date of filing: 27.10.2015
(51) Int. Cl.: B64D 11/00, E05B 53/00

(54) **PIVOT BIN ASSEMBLY WITH MINIMAL FORCE REQUIRED FOR CLOSING**
GELENKBEHÄLTERANORDNUNG MIT MINIMALER ERFORDERLICHER KRAFT ZUM VERSCHLIESSEN
ENSEMBLE BAC PIVOTANT POURVU D'UNE FORCE MINIMALE REQUISE POUR LA FERMETURE

(30) Priority: 30.01.2015 US 201562109960 P; 10.07.2015 US 201514796829
(43) Date of publication of application: 06.12.2017
(73) Proprietor: Safran Cabin Inc., Huntington Beach, CA 92647 (US)
(72) Inventor: SAVIAN, Scott, Huntington Beach, CA 92647 (US)
(74) Representative: Stevenson-Hill, Jack Patrick
(86) International application number: PCT/US2015/057655
(87) International publication number: WO 2016/122737

(56) References cited:
- WO-A1-2016/007915
- US-A1- 2010 288 879
- US-A1- 2011 253 837
- US-A1- 2011 253 837
- US-A1- 2013 076 216
- US-A1- 2014 197 721
- US-A1- 2014 197 721
- US-A1- 2014 332 628
- None

## Description

### FIELD OF THE INVENTION

The present invention relates generally to overhead storage bin assemblies, and more particularly to an overhead storage bin assembly that includes a pivot bin having a bucket that requires low hand loads to close.

### BACKGROUND OF THE INVENTION

Commercial aircraft, such as the Airbus A320 or Boeing 737 are typically constructed from modular components, the size, weight and construction of which are dictated by many considerations, including fuselage dimensions, aesthetic and safety considerations. Many of these requirements are imposed by law or regulation. Aircraft components, such as overhead stowage compartments, seats, lavatories, galleys, lighting systems, etc. are all required to function within strictly confined spaces.

Manufacturers of aircraft are constantly refining interior aircraft designs to achieve more comfort and utility for passengers and crew within carrier-imposed restraints on cost, weight, maintenance down-time, and safety. Commercial passenger aircraft generally include overhead luggage storage bins mounted from the ceiling, walls or other structural portion of the aircraft over the passenger seats. These bins are designed to accommodate the size, shape, and weight of passenger carry-on luggage.

Other overhead storage bin assemblies are well known in the art. For example, see U.S. Patent Publication No. 2011/0253837 published October 20, 2011, U.S. Patent No. 4,637,642 issued on January 20, 1987, U.S. Patent No. 5,567,028 issued on October 22, 1996, and U.S. Patent No. 8,262,022 issued on September 11, 2012. US2014/197721 relates to a pivot bin assembly which, according to the abstract of this document, is configured to receive luggage and be positioned in the interior of an aircraft. The pivot bin assembly includes an upper housing that includes a strongback and first and second side panels, a bucket that cooperates with the upper housing to define a bin interior, a first pivot mechanism operatively associated with the first side panel and the bucket, and a second pivot mechanism operatively associated with the second side panel and the bucket. The first and second pivot mechanisms are axially aligned along a pivot axis such that the bucket pivots about the pivot axis with respect to the upper housing between an open position and a closed position.

### BRIEF DESCRIPTION OF THE DRAWINGS

FIG. 1 is a side elevational view of two pivot bin assemblies showing a first pivot bin assembly in an open position and a second pivot bin assembly in a closed position;
FIG. 2 is a perspective view of a portion of an aircraft cabin with a series of pivot bin assemblies installed therein;
FIG. 3 is a perspective view of the pivot bin assemblies of FIG. 1;
FIG. 4 is a perspective view of the pivot bin assemblies of FIG. 1 with luggage therein;
FIG. 5 is a perspective view of the pivot bin assemblies of FIG. 1 with one of the buckets exploded therefrom;
FIG. 6 is a cross-sectional view taken along line 6--6 of FIG. 1;
FIG. 7A is a cross-sectional view taken along the same line as FIG. 6, but showing an alternative example for securing the bucket to the upper housing;
FIG. 7B is a cross-sectional view of a portion of the pivot bin assemblies of FIG. 1;
FIG. 7C is a cross-sectional view taken along line 7C--7C of FIG. 1;
FIG. 8 is a cross-sectional view of one of the pivot bin assemblies of FIG. 1 and showing how a standard piece of luggage fits therein;
FIG. 9 is a cross-sectional view of one of the pivot bin assemblies of FIG. 1 with the PSU channel omitted;
FIG. 10 is a cross-sectional view of a pivot bin assembly with a different valence;
FIG. 11 is a detailed cross-sectional view showing a rotary damper pivot mechanism providing the pivot point between the side panel and the bucket;
FIG. 12 is a detailed cross-sectional view showing a pivot axle as the pivot mechanism providing the pivot point between the side panel and the bucket;
FIG. 13 is an elevational view showing the first latch assembly in the latched position;
FIG. 14 is an elevational view showing the first latch assembly in the unlatched position;
FIG. 15 is a cross-sectional view of the first latch assembly in the latched position;
FIG. 16 is a perspective view of a portion of an aircraft cabin showing a plurality of pivot bin assemblies and PSU pods installed therein and showing an empty PSU channel;
FIG. 17A is a perspective view of the interior of an aircraft showing a series of PSU pod assemblies installed therein with cabin lighting shining upwardly;
FIG. 17B is a perspective view of the interior of an aircraft showing a series of PSU pod assemblies installed therein with cabin lighting shining outwardly;
FIG. 17C is a perspective view of the interior of an aircraft showing a series of PSU pod assemblies installed therein with cabin lighting shining downwardly;
FIG. 18 is a cross-sectional view of a PSU pod assembly and showing the passenger components and system components;
FIG. 19A is a side schematic view of a portion of a prior art aircraft showing a series of seats with the passenger components and system components located thereabove in the PSU channel;
FIG. 19B is an end schematic view of a portion of a prior art aircraft showing a series of seats with the passenger components and system components located thereabove in the PSU channel;
FIG. 20A is an end schematic view of a portion of an aircraft showing a series of seats with the passenger components and system components located thereabove;
FIG. 20B is a side schematic view of a portion of an aircraft showing a series of seats with the passenger components and system components located thereabove;
FIG. 21 is a perspective view of two pivot bin assemblies in accordance with another preferred example showing a first pivot bin assembly in an open position and a second pivot bin assembly in a closed position;
FIG. 22 is a side elevational view of the pivot bin assembly of FIG. 21 with the bucket in the closed position;
FIG. 23A is a cross-sectional view taken along line 23A-23A of FIG. 22;
FIG. 23B is a cross-sectional view taken along line 23B-23B of FIG. 22;
FIG. 23C is a cross-sectional view taken along line 23C-23C of FIG. 22;
FIG. 23D is a cross-sectional view taken along the same line as 23C-23C of FIG. 22 and showing an example that includes a rotary damper and coil spring;
FIG. 24 is a side elevational view of the pivot bin assembly of FIG. 21 with the bucket shown in solid lines in the intermediate open position and the bucket shown in dashed lines in the open position;
FIG. 25A is a side elevational view of the pivot bin assembly of FIG. 21 with the bucket in cross-section and in the open position and the inner and outer plates removed;
FIG. 25B is a side elevational view of the pivot bin assembly of FIG. 21 with the bucket in cross-section and in the closed position and the inner and outer plates removed;
FIG. 26 is a side elevational view of the pivot bin assembly of FIG. 21 with the bucket shown in solid lines in the open position and the bucket shown in dashed lines in the intermediate open position;
FIG. 27 is a side elevational view of the pivot bin assembly of FIG. 21 with the bucket in the open position;
FIG. 28 is a side elevational schematic view of a connecting unit in accordance with a preferred example;
FIG. 29 is a side elevational schematic view of a connecting unit in accordance with another preferred example;
FIG. 30 is a side elevational view of the pivot bin assembly of FIG. 21 with the bucket in the open position and the inner and outer plates removed to show a connecting unit with powered lift assist;
FIG. 31 is a side elevational view of a pivot bin assembly with the bucket in the closed position in accordance with another example;
FIG. 32 is a side elevational view of the pivot bin assembly of FIG. 31 with the bucket in the open position;
FIG. 33 is a perspective view of two pivot bin assemblies of FIG. 31 showing the first pivot bin assembly in an open position and the second pivot bin assembly in a closed position;
FIG. 34 is an exploded perspective view of the pivot bin assembly of FIG. 31;
FIG. 35 is a side elevational view of a pivot bin assembly in the closed position in accordance with another example;
FIG. 36 is a side elevational view of the pivot bin assembly of FIG. 35 in the open position;
FIG. 37 is a side elevational view of the pivot bin assembly of FIG. 35 in the closed position with the outer clevis plate removed;
FIG. 38 is a side elevational view of the pivot bin assembly of FIG. 35 in the open position with the outer clevis plate removed;
FIG. 39 is a perspective view of a dual pivot bin assembly of FIG. 35;
FIG. 40 is an exploded perspective view of the dual pivot bin assembly;
FIG. 41 is a cross-sectional view through the clevis assembly in accordance with an example,
FIG. 42 is an elevational view of the interior of an aircraft with the pivot bin assemblies of FIG. 35 on both sides and showing the buckets in the open and closed positions;
FIG. 43 is a side cross-sectional schematic view of a pivot bin assembly in the closed position in accordance with a preferred embodiment of the present invention;
FIG. 44 is a side cross-sectional schematic view of the pivot bin assembly of FIG. 43 in a partially closed position;
FIG. 45 is a side cross-sectional schematic view of the pivot bin assembly of FIG. 43 in the open closed position;
FIG. 46 is a side cross-sectional schematic view of a pivot bin assembly in the closed position in accordance with another preferred embodiment of the present invention with the centers of gravity of the bin and luggage offset toward the bin front opening;
FIG. 47 is a side cross-sectional schematic view of the pivot bin assembly of FIG. 46 in the open closed position;
FIG. 48 is a side cross-sectional schematic view of a pivot bin assembly in the closed position in accordance with another preferred embodiment of the present invention with the centers of gravity of the bin and luggage offset away from the bin front opening; and
FIG. 49 is a side cross-sectional schematic view of the pivot bin assembly of FIG. 48 in the open closed position.

Like numerals refer to like parts throughout the several views of the drawings.

### SUMMARY OF THE PREFERRED EMBODIMENTS

In accordance with a first aspect of the present invention there is provided an aircraft storage bin as defined in claim 1.

Other features of the present invention are set out in the dependent claims.

### DETAILED DESCRIPTION OF THE PREFERRED EMBODIMENTS

The following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be, but not necessarily are references to the same embodiment; and, such references mean at least one of the embodiments.

Reference in this specification to "one embodiment" or "an embodiment" means that a particular feature, structure, or characteristic described in connection with the embodiment is included in at least one embodiment of the-disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks: The use of highlighting has no influence on the scope and meaning of a term; the scope and meaning of a term is the same, in the same context, whether or not it is highlighted.

It will be appreciated that the same thing can be said in more than one way. Consequently, alternative language and synonyms may be used for any one or more of the terms discussed herein. No special significance is to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any exemplified term. Likewise, the disclosure is not limited to various embodiments given in this specification.

Without intent to further limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions, will control.

It will be appreciated that terms such as "front," "back," "top," "bottom," "side," "short," "long," "up," "down," "aft," "forward," "inboard," "outboard" and "below" used herein are merely for ease of description and refer to the orientation of the components as shown in the figures. It should be understood that any orientation of the components described herein is within the scope of the present invention.

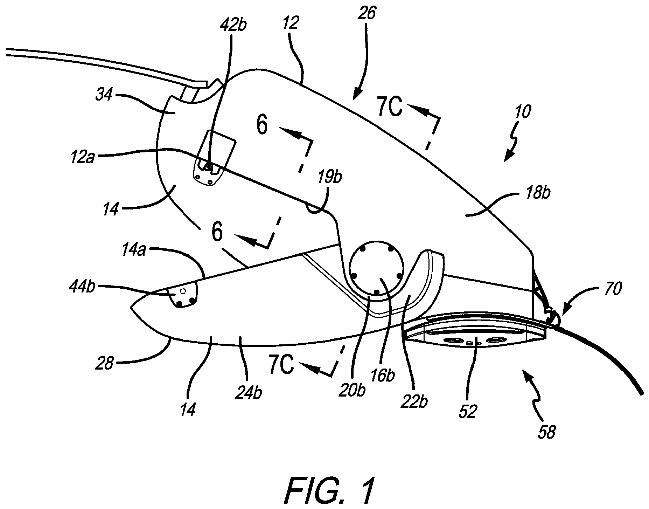

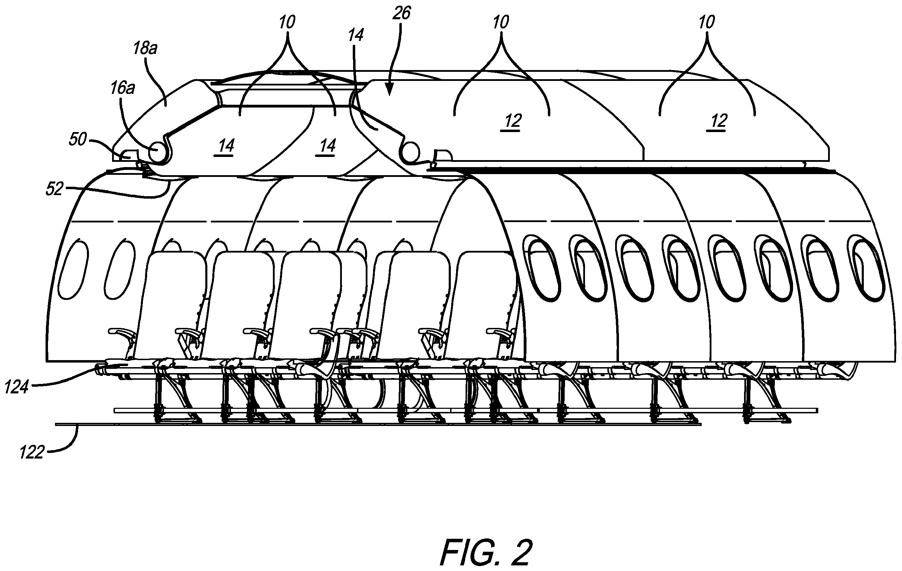

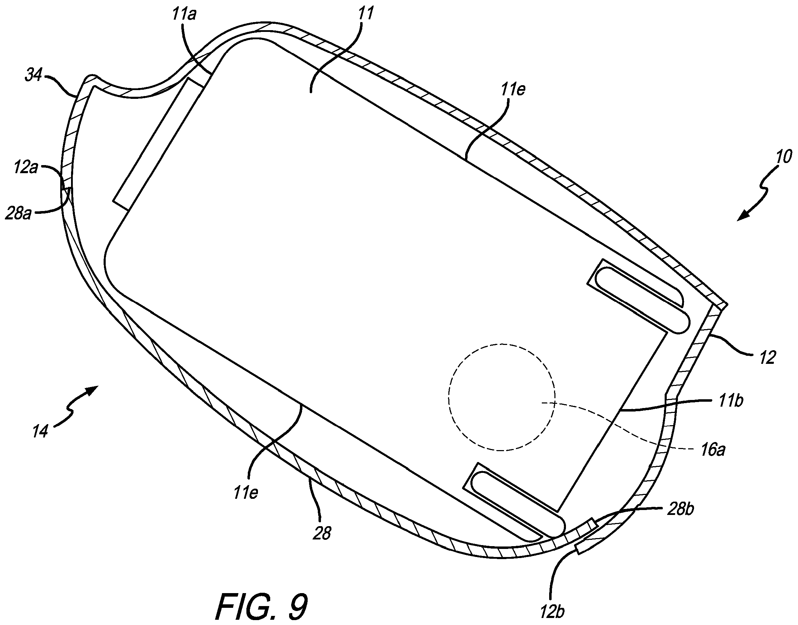

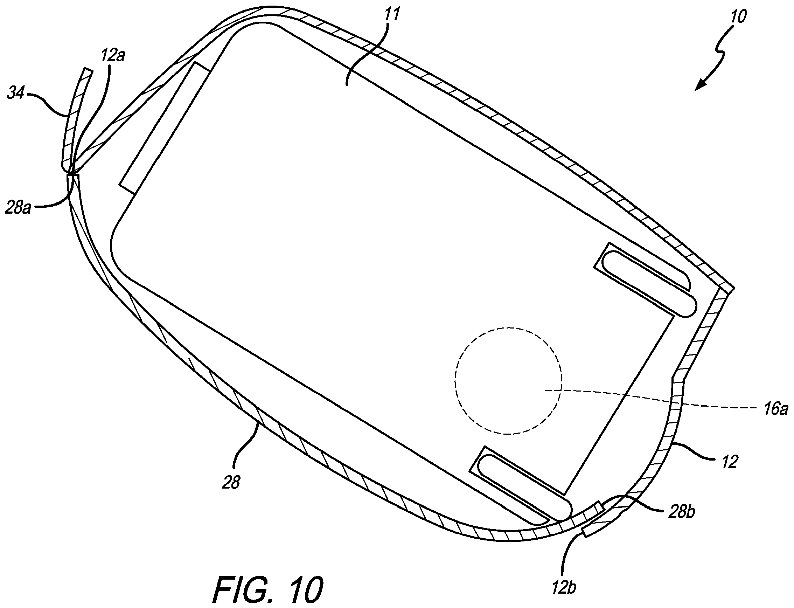

Referring now to the drawings, wherein the showings are for purposes of illustrating the present invention and not for purposes of limiting the same, FIGS. 1-16 show a pivot bin assembly 10. In particular, the invention can be used on commercial passenger aircraft. However, this is not a limitation on the present invention and the pivot bin assembly can be used elsewhere.

The present invention pivot bin assembly 10 employs a "clamshell design." In a preferred embodiment, the pivot bin assembly 10 allows as much of the entire volume inside the bin as possible to be used, increasing volume and baggage capacity when compared to the prior art. The design and structure also provides a way to integrate systems such as environmental control system ("ECS") ducting and electrical.

As will be appreciated by those skilled in the art, within the cabin of an aircraft, overhead stowage bins are typically secured to attachment points, such as hard points and overhead and side attachments. Accordingly, a description of the attachment of the pivot bin assembly will be omitted.

FIGS. 1-16 show a dual pivot bin assembly that is essentially two pivot bin assemblies 10 with a common strongback 12 and that can be installed together in the cabin of an aircraft. However, it will be understood by those of ordinary skill in the art, that a single and separate pivot bin assembly 10 with a single strongback 12 is within the scope of the present invention and is described and claimed herein. In another embodiment, more than two or multiple pivot bin assemblies 10 can include a common strongback 12. The figures show pivot bin assemblies 10 that are positioned outboard on the aircraft. However, it will be appreciated, that the pivot bin assembly 10 can be used inboard on a wide body aircraft. For example, two sets of back to back outboard facing pivot bin assemblies 10 can include a common strongback 12.

The pivot bin assembly 10 includes the strongback 12, a tray or bucket 14 with a first and a second pivot mechanism or pivot axle 16a and 16b on each side, and first and second side panels 18a and 18b. With respect to each pivot bin assembly 10, the strongback 12 and first and second side panels 18a and 18b are referred to herein together as the upper housing 26. Generally, the pivot bin assembly 10 includes the upper housing 26, which includes the strongback 12 and the first and second side panels 18a and 18b, and the bucket 14. The bucket 14 and upper housing 26 cooperate to define a bin interior 36. The bucket 14 defines the lower portion of the bin interior 36 and the upper housing defines the upper portion of the bin interior 36. It will be appreciated that because the pivot bin assembly includes two sides that each have a pivot mechanism and associated components. Throughout the description, many of the components are denoted as a "first" component with an "a" and as a "second" component with a "b". However, because many of the components are structurally the same, in some portions of the specification and drawings, the "a" and "b" are omitted. For example, the first and second pivot mechanisms/axles are denoted as "16a" and "16b". In some portions of the specification and drawings, the pivot mechanism/axle may be denoted generally as "16".

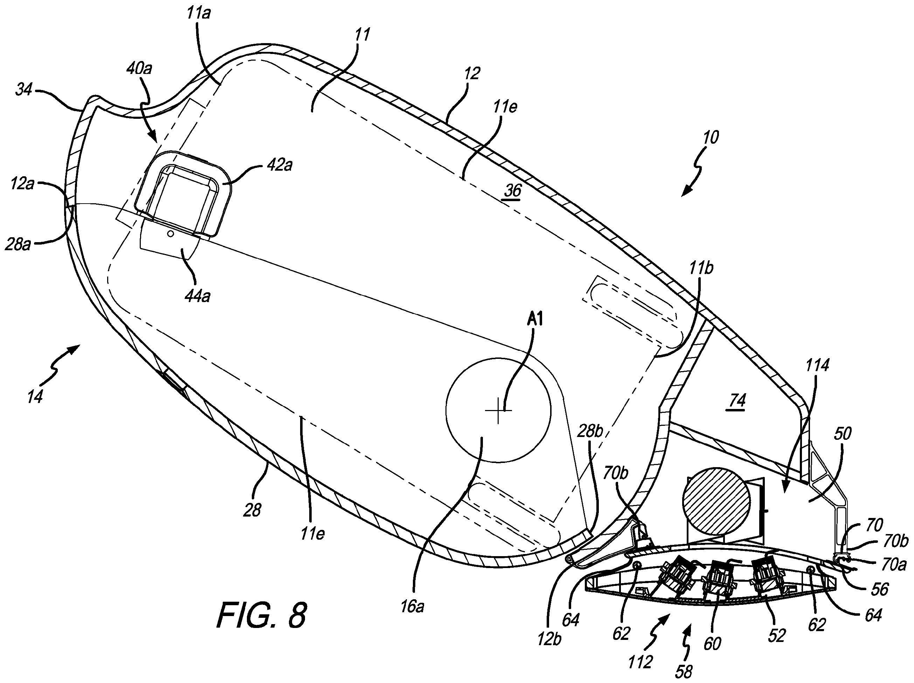

The strongback 12 and first and second side panels 18a and 18b are separate components. However, in another embodiment, the strongback 12 and first and second side panels 18a and 18b (the upper housing 26) can be a unitary component. The pivot bin assembly 10 includes a single piece bucket 14 that includes a bottom 28 and first and second opposing sides 24a and 24b. In another example, the bucket 14 can include multiple pieces, e.g., a three-piece design that includes the bottom 28 and first and second opposing sides 24a and 24b as separate components. It will be appreciated by those of ordinary skill in the art that the bucket 14 and upper housing 26 provide a "clamshell design," where at least a portion of the bottom edge 19a of the first side panel 18a and the bottom edge 19b of the second side panel 18b and the front bottom edge 12a of the strongback 12 meet edge to edge with or abut the top edge or front lip 14a of the bucket 14. In the closed position, other than the rear top edge 28b of the bottom 28 of the bucket 14 and the area adjacent thereto and the strongback 12 (see FIG. 8), there is little to no overlap between the bucket 14 and the upper housing 26. In the exampleshown in FIG. 1, other than the localized overlap between the first and second ears 20a and 20b and the first and second indented portions 22a and 22b, in the closed position, there is no overlap between the first and second side panels 18a and 18b and the first and second sides 24a and 24b of the bucket 14. In other words, in a preferred example, the bucket 14 does not enter the upper portion of the bin interior 36, which is defined by the upper housing 26, when the bucket 14 is pivoted to the closed position. It will be appreciated by those skilled in the art, that not only does this increase stowage volume and reduce weight by eliminating redundant paneling, but also significantly decreases the number of parts needed for the entire pivot bin assembly 10, compared to the prior art. As shown in the figures, the strongback 12 can include an integral valence 34 for lighting, ducting and/or other system components that can be generally hidden from passenger view. In a preferred example, the valence 34 is formed as a unitary portion of the strongback 12. However, this is not a limitation and the valence 34 can be omitted or be a separate component.

When the bucket 14 is pivoted to the closed position, the first and second sides 24a and 24b of the bucket 14 are not received in the upper portion of the bin interior 36. In other words, in the portion of the first and second side panels 18a and 18b that do not include the first and second ears 20a and 20b and first and second indented portions 22a and 22b, the first and second top edges 25a and 25b do not pass or overlap with the first and second bottom edges 19a and 19b when the bucket 14 is pivoted to the closed position. Preferably, the first and second top edges 25a and 25b and first and second bottom edges 19a and 19b abut one another. However, an example is possible where the first and second top edges 25a and 25b and first and second bottom edges 19a and 19b are horizontally separated from one another, but, in a vertical direction, the first and second top edges 25a and 25b do not pass or overlap with the first and second bottom edges 19a and 19b when the bucket 14 is pivoted to the closed position.

In a preferred example, the strongback 12, bucket 14 and first and second side panels 18a and 18b are made out of crush-core panel. However, this is not a limitation and other materials can be used. In an example, the single piece bucket 14 is made using crush core match metal molding. This creates a continuous composite structure with a C-frame cross section that can be made from a single mold. The continuous piece acts as a structural I-beam. However, this structure is not a limitation.

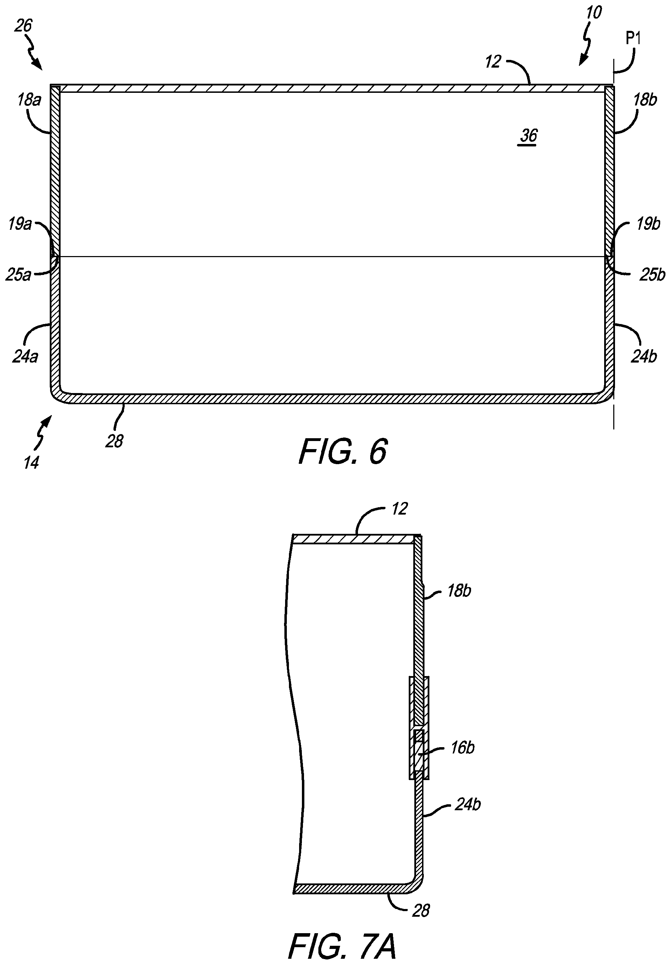

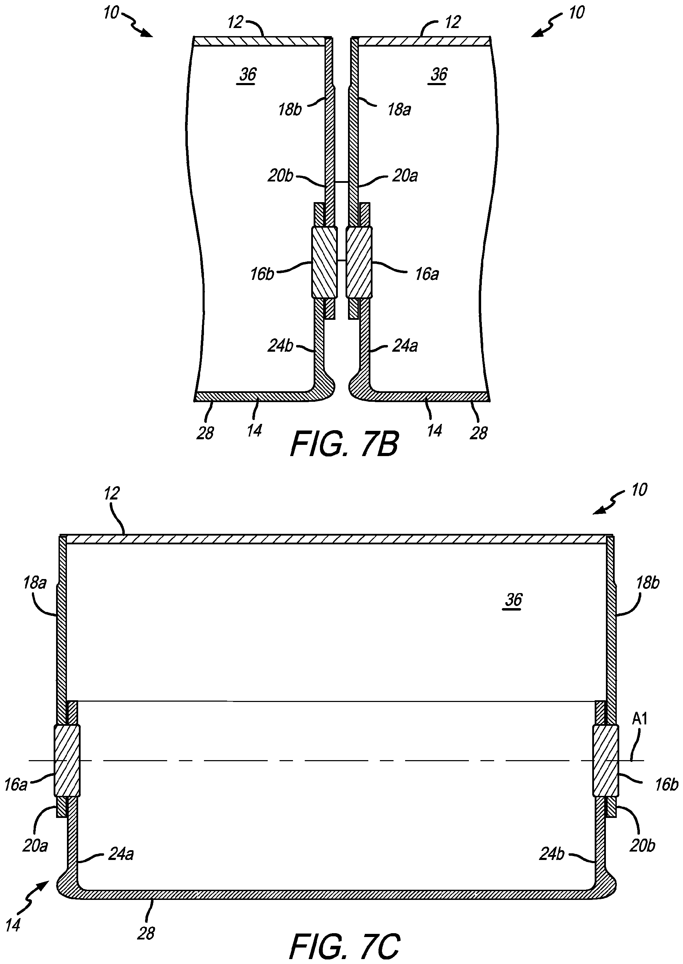

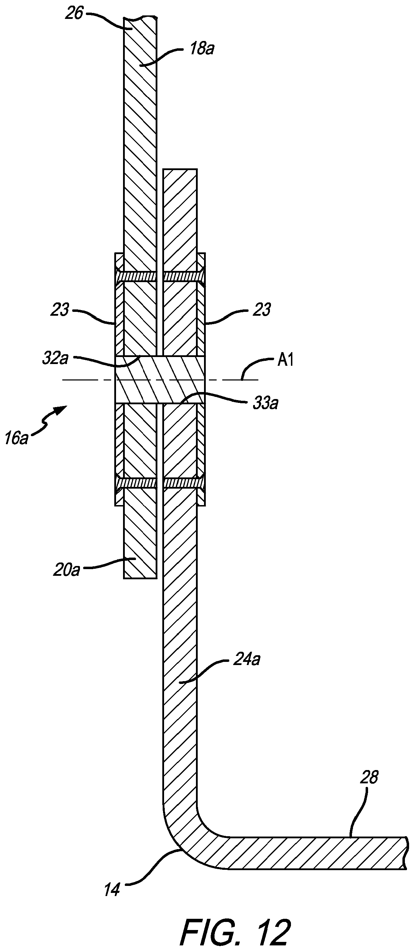

As shown in FIGS. 1-12, generally, first and second side panels 18a and 18b include first and second pivot mechanisms 16a and 16b that are operatively associated with the bucket 14, and allow the bucket 14 to pivot with respect to the upper housing 26 between an open position and a closed position. Any type of pivot mechanism that allows the bucket 14 to pivot with respect to the upper housing 26 is within the scope of the present invention. For example, the first and second pivot mechanisms 16a and 16b can be pivot axles, as shown in FIG. 12. It will be appreciated that the first and second pivot mechanisms 16a and 16b or axles pivot or rotate about a pivot axis. In a preferred embodiment, the first and second pivot mechanisms 16a and 16b are axially aligned such that the pivot axles rotate about the same axis Al, as shown in FIGS. 7C and 8.

The first side panel 18a includes a first ear 20a and the second side panel 18b includes a second ear 20b extending downwardly therefrom. The first and second ears 20a and 20b mate with or are received in first and second indented portions 22a and 22b that are formed in the first and second sides 24a and 24b of the bucket 14. As shown in the figures, preferably, the first and second indented portions 22a and 22b extend inwardly into the interior of the bucket 14. However, in another example, the indented portions can extend outwardly. Furthermore, in another example, the ears can extend upwardly from the bucket and the indented portions can be defined inwardly or outwardly on the side panels of the upper housing.

In an example, the first side panel 18a, first ear 20a and the first side 24a of the bucket 14 (other than the first indented portion 22a) all are positioned in a generally common plane PI (see FIG. 6). Likewise, the second side panel 18b, second ear 20b and the second side 24b of the bucket 14 (other than the second indented portion 22b) all are positioned in a generally common plane. In another example, the first and second ears 20a and 20b can be part of the bucket 14 and the first and second indented portions 22a and 22b can be defined in the first and second side panels 18a and 18b.

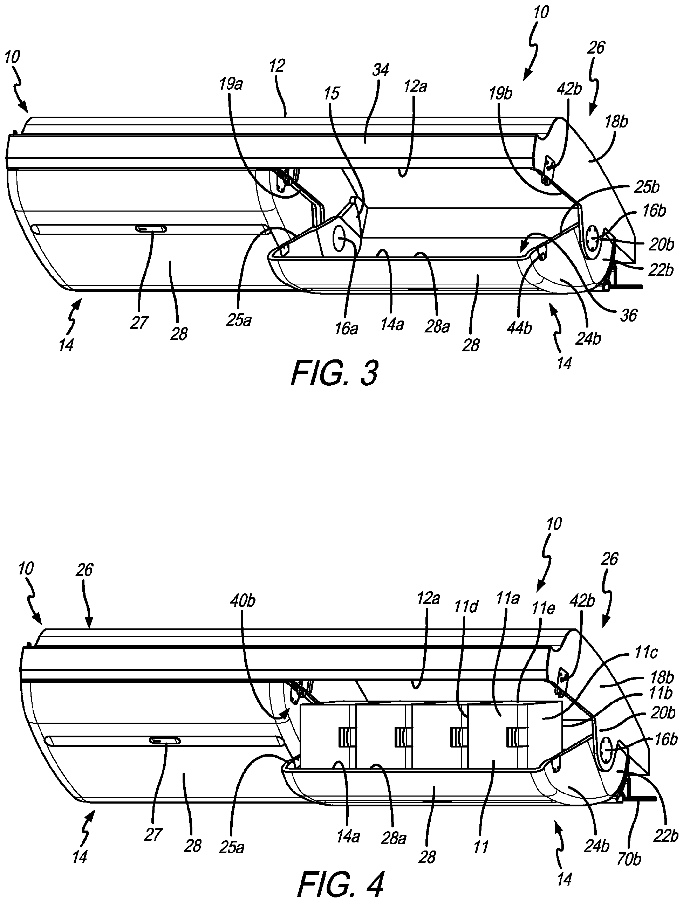

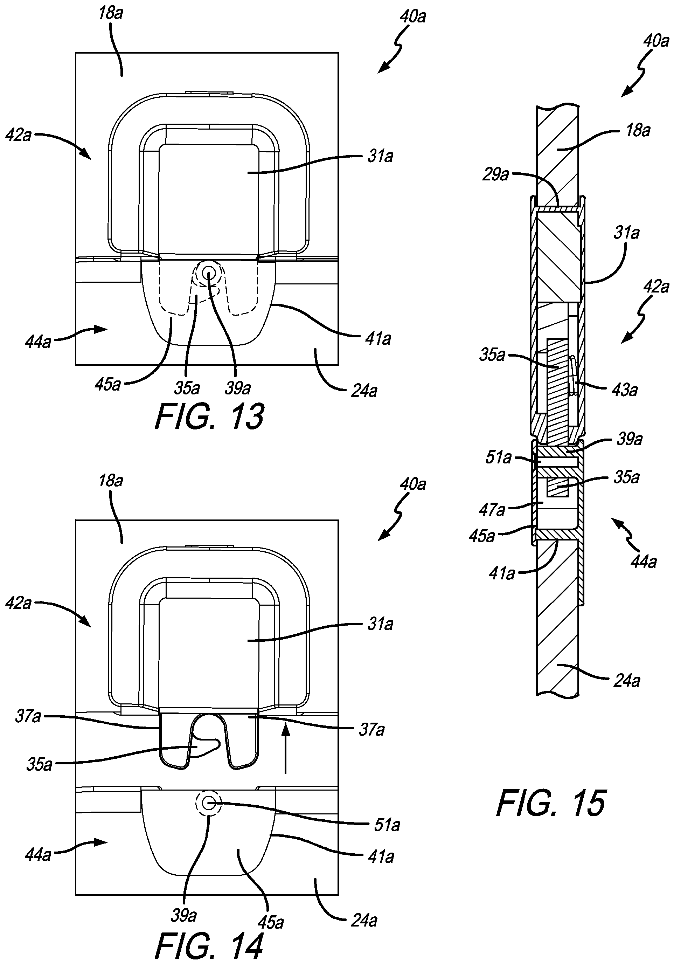

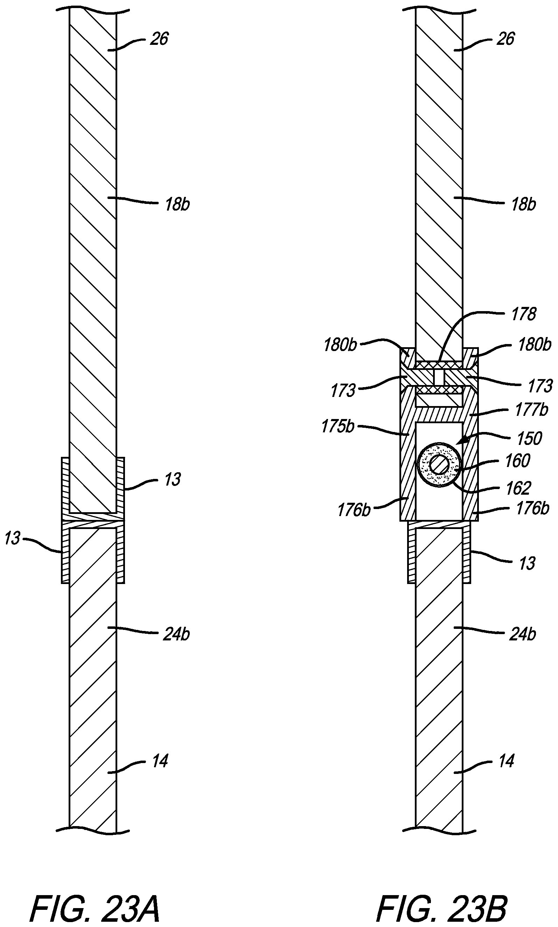

As discussed above, and as shown in FIGS. 6 and 8, in a preferred example, in the closed position, the bottom edges of the first and second side panels 18a and 18b abut the top edges 25a and 25b of the first and second sides 24a and 24b of the bucket 14 (FIG. 6) and the front bottom edge 12a of the strongback 12 abuts the front top edge 28a of the bottom 28 of the bucket 14 (FIGS. 8 and 14). It will be appreciated that the front bottom edge 12a of the strongback can include the valence 34. In other words, as used herein, front bottom edge 12a is the open edge that is abutted by the bucket 14, whether it actually is the strongback, valence or a panel extending from the strongback. As is also shown in FIGS. 8 and 14, the bottom 28 of the bucket 14 includes a rear top edge 28b that is positioned adjacent to but does not abut a rear bottom edge 12b of the strongback 12. This allows a portion of the bottom 28 of the bucket to overlap with the strongback 12 when the bucket 14 pivots to the open position. It will be appreciated by those skilled in the art that in a commercial example, the bucket and/or upper housing may include edge trim, seals or the like that cover the top edges of the bucket or the bottom edges of the upper housing. However, this is not a limitation and any such components are considered part of the upper housing or bucket. For example see the trim 13 shown in FIGS. 23A and 23B. In a preferred example, the pivot bin assembly 10 includes at least one stop member 15 (and preferably a plurality of stop members) positioned within the bin interior 36 and that maintain the bucket 14 in the open position and prevents it from pivoting too far. Any type of stop member 15 may be used. For example, as shown in FIG. 3, the stop member 15 can abut the angled top edge 14b of the back of the bucket 14 and/or the rear top edge 28b of the bottom 28 of the bucket 14. The stop member 15 can be a separate component or be built in to the upper housing 26 (e.g., a ledge).

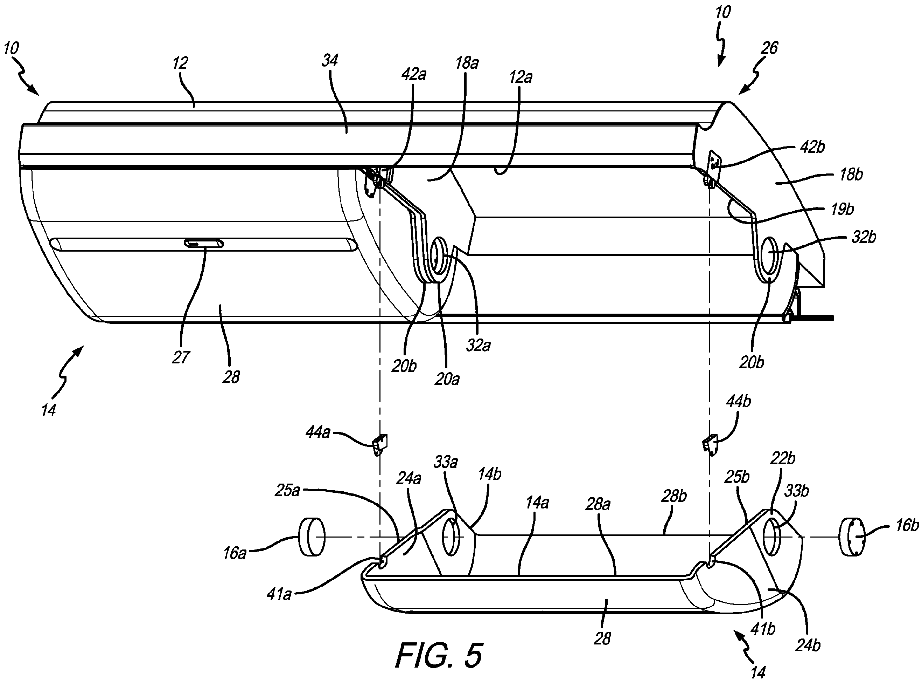

In a preferred example, the first pivot mechanism 16a extends between the first ear 20a and the first side 24a of the bucket 14 and the second pivot mechanism 16b extends between the second ear 20b and second first side 24b of the bucket 14. As discussed above, the first and second pivot mechanisms can be pivot axles on which the bucket 14 can rotate. As shown in FIGS. 5-6 and 7B-7C, a portion of the first pivot mechanism 16a can be positioned in corresponding openings 32a and 33a in the first ear 20a and first side 24a, respectively, and a portion of the second pivot mechanism 16b can be positioned in corresponding openings 32b and 33b in the second ear 20b and second side 24b, respectively. In another example, a pivot axle can extend from the bucket and into an opening in the ear or vice versa. Any pair of pivot mechanisms that are axially aligned and that allow the bucket 14 to pivot with respect to the upper housing 26 is possible.

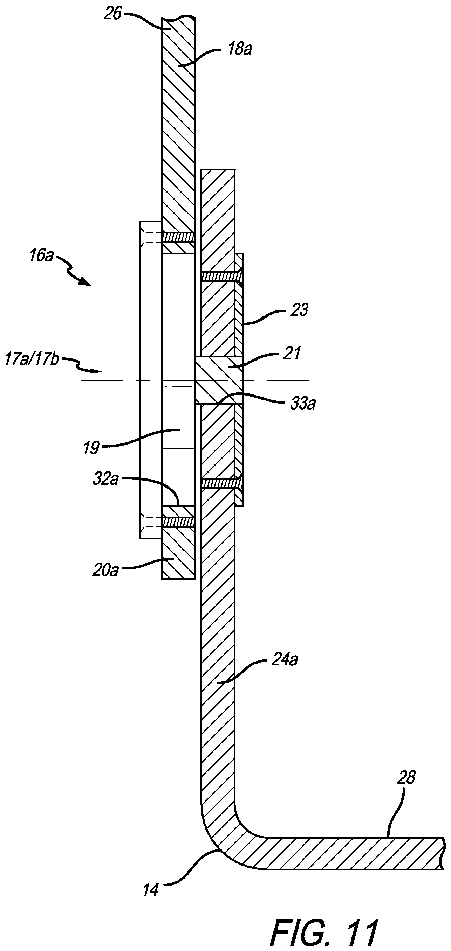

As shown in FIG. 11, in a preferred example, the first and second pivot mechanisms comprise first and second rotary dampers 17a and 17b. With respect to the first rotary damper 17a, one of the housing 19 or the axle 21 is secured within opening 32a and the other is secured within opening 33a. With respect to the second rotary damper 17b, one of the housing 19 or the axle 21 is secured within opening 32b and the other is secured within opening 33b. It will be appreciated that FIG. 11 only shows the first rotary damper 17a, but that second rotary damper 17b is a mirror image thereof The first and second rotary dampers 17a and 17b can include covers 23 to secure them in place.

It will be understood that the first and second rotary dampers 17a and 17b provide the ability to damp or control the descent or pivoting of the bucket when it pivots to the open position. In a preferred example, the first and second rotary dampers are either of the rotary dampers taught in the '529 publication or the '221 publication. In another example, each of the first and second side panels 18a and 18b can include a cover 23 positioned on the outside or the inside of the bin interior 36 and that secures the first and second side panels 18a and 18b to the bucket 14 and that covers and houses the first and second pivot mechanism 16a and 16b. It will be appreciated that any type of power assist (for raising or lowering the bucket) or damper is possible. For example, a prior art damper can be utilized, such as a linear damper that includes a cylinder with a piston and damping fluid therein or a spring for assist (as described below).

As shown in FIGS. 1-5 and, more specifically in FIGS. 13-15, in a preferred example, the pivot bin assembly 10 includes first and second latch assemblies 40a and 40b operatively associated with the first and second side panels 18a and 18b and the first and second sides 24a and 24b of the bucket 14. Preferably, the first latch assembly 40a includes a first hook portion 42a and a first striker portion 44a and the second latch assembly 40b includes a second hook portion 42b and a second striker portion 44b. In a preferred example, the first hook portion 42a extends downwardly from the bottom edge 19a of the first side panel 18a and the first striker portion 44a is positioned in a first recess 41a defined in the top edge 25a of the first side 24a of the bucket 14 and the second hook portion 42b extends downwardly from the bottom edge 19b of the second side panel 18b and the second striker portion 44b is positioned in a second recess 41b defined in the top edge 25b of the second side 24b of the bucket 14.

In another example, the first hook portion 42a extends upwardly from the top edge 25a of the first side 24a of the bucket 14 and the first striker portion 44a is positioned in a first recess defined in the bottom edge of the first side panel 18a, and the second hook portion 42b extends upwardly from the top edge 25b of the second side 24b of the bucket 14 and the second striker portion 44b is positioned in a second recess defined in the bottom edge of the second side panel 18b.

In another preferred example, the first striker portion 44a extends downwardly from the bottom edge 19a of the first side panel 18a and the first hook portion 42a is positioned in a first recess 41a defined in the top edge 25a of the first side 24a of the bucket 14 and the second striker portion 44b extends downwardly from the bottom edge 19b of the second side panel 18b and the second hook portion 42b is positioned in a second recess 41b defined in the top edge 25b of the second side 24b of the bucket 14.

In another example, the first striker portion 44a extends upwardly from the top edge 25a of the first side 24a of the bucket 14 and the first hook portion 42a is positioned in a first recess defined in the bottom edge of the first side panel 18a, and the second striker portion 44b extends upwardly from the top edge 25b of the second side 24b of the bucket 14 and the second hook portion 42b is positioned in a second recess defined in the bottom edge of the second side panel 18b. The first and second latch assemblies 40a and 40b can be actuated manually or electronically. As shown in FIG. 5, the pivot bin assembly 10 preferably includes an operating member or release button 27 disposed on the bucket 14. In a preferred example, the operating member 27 comprises a switch that is in electrical communication (with wires or wirelessly) with the first and second latch assemblies 40a and 40b.

It will be appreciated that any type of latching mechanism that allows the bucket 14 to connect to the upper housing 26 is possible. Furthermore, it will be appreciated that the terms first hook portion and second hook portion refer to the entire assembly secured to the upper housing in the figures. And, the terms first striker portion and second striker portion refer to the entire assembly secured to the upper housing in the figures. The hook portion can be any latching mechanism that includes a hook or latch that mates with or latches to a striker.

FIGS. 13-15 show an exemplary embodiment of the first latch assembly 40a. It will be understood that the second latch assembly 40b includes essentially the same components. FIGS. 13 and 15 show the first latch assembly 40a in the latched position and FIG. 14 shows the first latch assembly 40a in the unlatched position. Preferably, the first hook portion 42a is mounted in a recess 29a in the first side panel 18a and includes a housing 31a, a hook 35a and guide members 37a that help guide the striker 39a (which can be secured in place by a threaded fastener 51a) into the desired position. As is known in the art, the hook 35a can be mounted on a pivot pin and include a spring 43a for urging it into the desired position. Preferably the first striker portion 44a includes a housing 45a that defines a guide recess 47a defined therein and that is spanned by the striker 39a. In use, when the bucket 14 is pivoted to the closed position, the guide members 37a are received in the guide recess 47a, and, as a result of the angle on the bottom edge of the hook 35a and the round shape of the striker 39a, the hook 35a is pivoted out of the way and the striker 39a is received fully between the guide members 37a. As a result of the spring 43a, the hook 35a is urged into the position shown in FIG. 13, and the first latch assembly 40a is now in the latched position.

It will be appreciated by those skilled in the art that by the first and second hook portions 42a and 42b extending downwardly from the first and second side panels 18a and 18b and latching to first and second striker portions 44a and 44b, which are essentially embedded in the first and second sides 24a and 24b of the bucket 14 allows the top edge 14a of the bucket 14 (i.e., top edges 25a and 25b and front top edge 28a to abut the bottom edge (bottom edges 19a and 19b and front bottom edge 12a) of the upper housing 26. In other words, the first side panel 18a, the first side 24a of the bucket 14 and the first latch assembly 40a are all lined up generally vertically and the second side panel 18b, the second side 24b of the bucket 14 and the second latch assembly 40b are all lined up generally vertically.

The first and second latch assemblies 40a and 40b shown in the figures are not a limitation and any type of latch assembly or mechanism for securing the bucket 14 to the upper housing 26 is possible. For example, the pivot bin assembly can include a center latch that connects the bucket to the strongback.

As shown in FIGS. 4, 8 and 14, the pivot bin assembly 10 is designed to stow standard Travel Pro 22" bags or luggage 11 wheels first on their edge (this type of bag is referred to herein as "standard luggage"). As will be understood by those of ordinary skill in the art, storage of a maximum amount of luggage within overhead stowage bins is of utmost importance in passenger aircraft and the standard luggage discussed herein is used as an industry standard when determining the amount of cargo that will fit into overhead stowage bins. As shown in FIG. 4, a piece of standard luggage 11 includes a top 11a, a bottom 11b, a front 11c, a back 1 1 d and two sides 1 1 e. Typically, the standard luggage 11 includes wheels on the bottom llb thereof. In a preferred example, a pivot bin assembly 10 can stow up to four pieces of standard luggage within the bin interior. However, this is not a limitation. In another example, the pivot bin assembly can store more or less standard luggage.

In a preferred example, the pivot axis A1 or pivot point provided by the first and second pivot mechanisms 16a and 16b is not along the same lengthwise axis as the luggage stored within the bin interior, but is instead non-centrally located. Furthermore, the center of gravity of the luggage in the bin interior is moved outboard when compared to the prior art and closer to the pivot axis A1, thereby making the bucket 14 easier to close. Furthermore, compared to prior art pivot bins, the pivot bin assembly 10 can be moved further outboard from the aisle, thereby providing more passenger space and an open cabin feel. However, none of the statements that include comparisons to the prior art are intended to be a limitation.

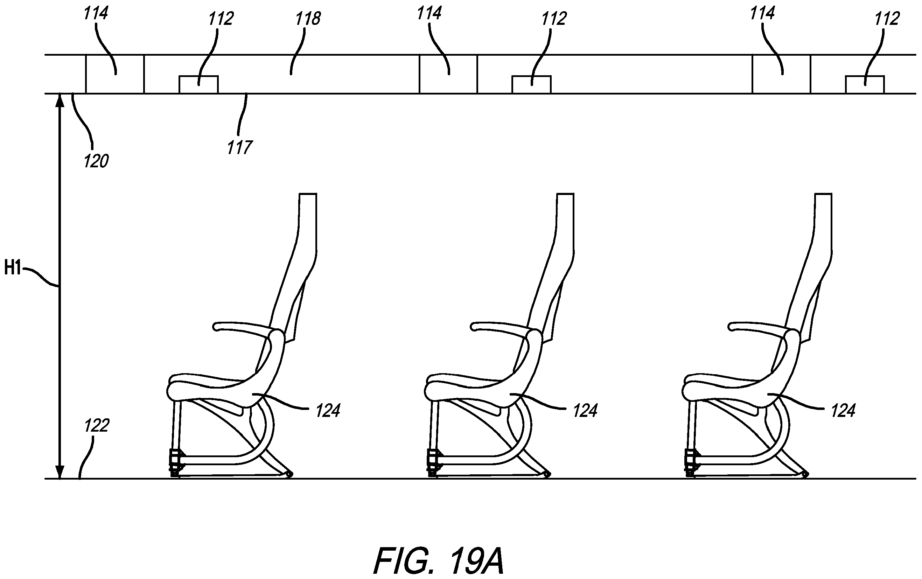

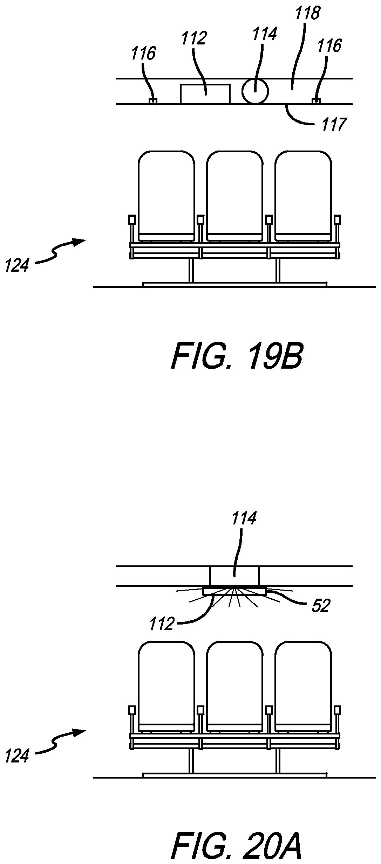

With reference to FIGS. 19A-19B, as will be appreciated by those of ordinary skill in the art, passenger aircraft typically include what is referred to as a passenger service unit ("PSU"), which is situated generally above each seat row (although not typically at the same pitch with respect to each seat row) in the overhead panel above the passenger seats in the cabin of airliners. Amongst other things a PSU contains reading lights, loudspeakers, illuminated signs and automatically deployed oxygen masks and also gaspers providing conditioned air. Passenger service units typically include individual PSU panels 117 that are specialized for each function (e.g., speaker panels, reading light panels, spacer panels, etc.) and that are positioned on rails 116 that run the length of the interior of the cabin. These individual functional specific panels are then configured to meet the aircraft and passenger needs, typically resulting in the configuration and installation of three hundred or more specialized panels. These panels 117 are installed within and cover a PSU channel 118 that is filled with both passenger elements 112 (e.g., reading lights, gaspers, flight attendant buttons, etc.) and systems elements 114 (wiring, oxygen tanks/components, cabin lights and associated electronics, ducting, etc.) creating a ceiling 120 above the passenger that restricts \bounds the passenger's head room. As shown in FIG. 19A, there is a fixed distance or height H1 from the floor 122 to the "ceiling" 120.

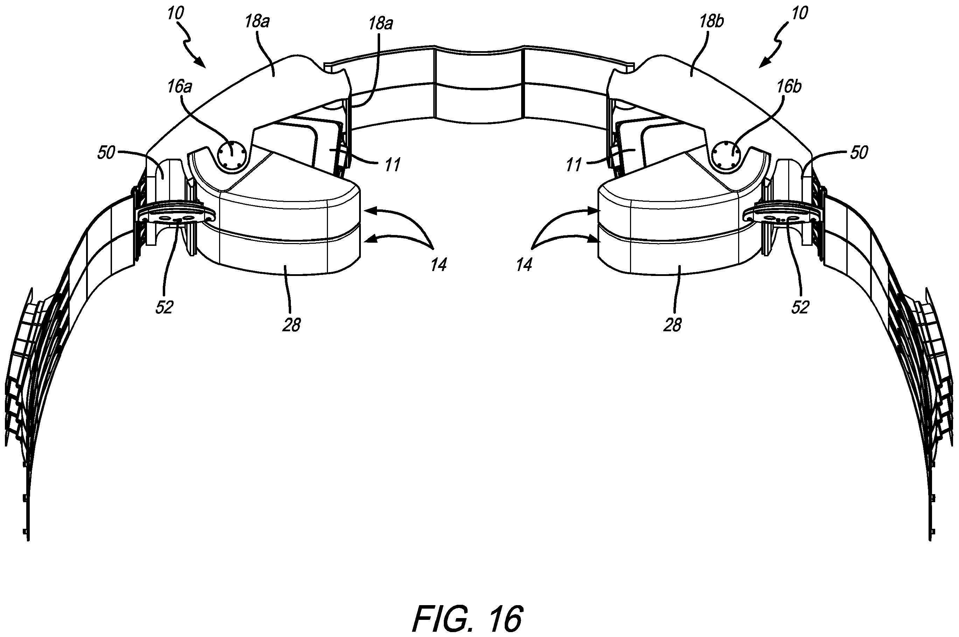

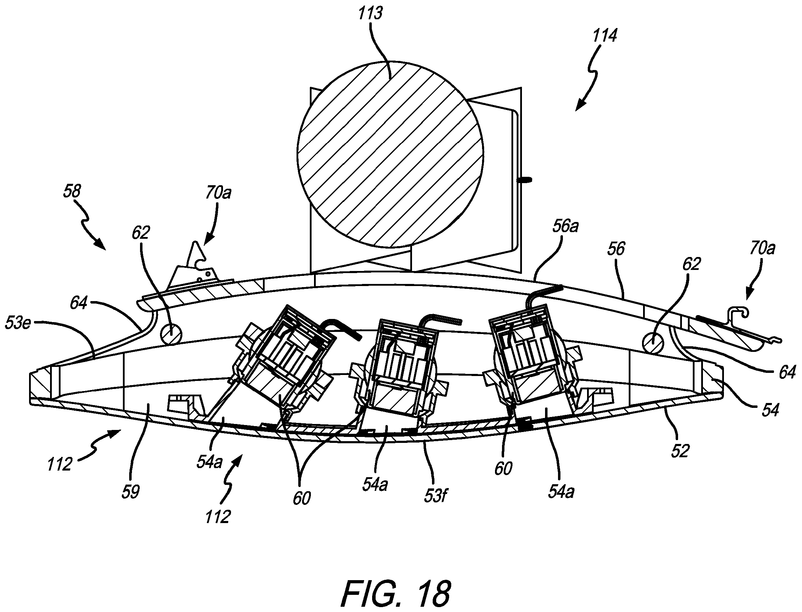

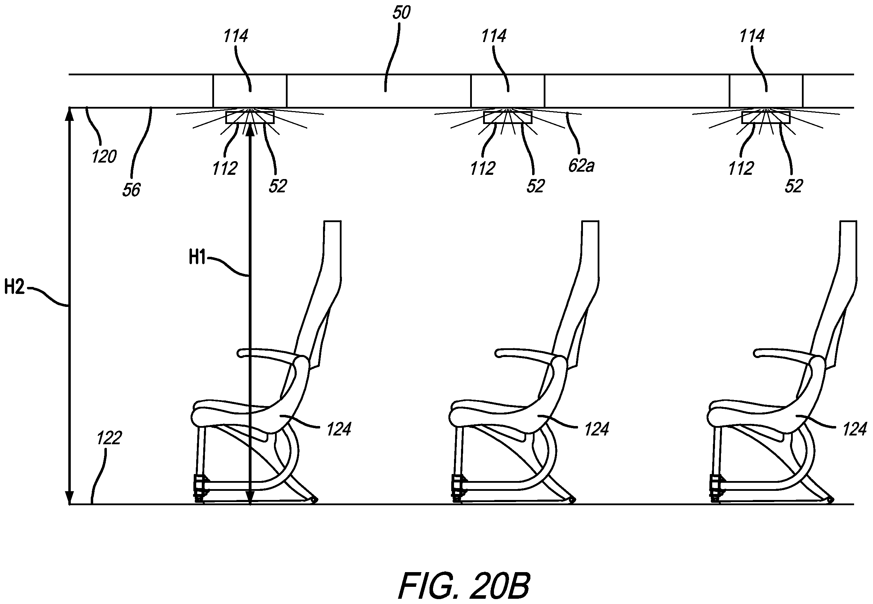

With reference to at least FIGS. 16-20B, in a preferred example, the pivot bin assembly 10 includes an integrated PSU channel 50 and a PSU pod 52 for each passenger row. As discussed above, aircraft PSUs typically include two types of elements: passenger elements 112 (reading lights, gaspers/air vents and flight attendant call buttons) and systems elements 114 (wiring, oxygen tanks 113/components, cabin lights and associated electronics, ducting, etc.). As shown in FIG. 18, the PSU pod 52 provides a way to at least partially separate the passenger element bundle 112 for each row from the systems elements bundle 114 for each row. By separating the passenger elements 112 from the systems elements 114 that are typically installed in a PSU, a PSU pod 52 (for the passenger elements 112) is configured or positioned independent of the systems elements 114, which are positioned in the PSU channel 50. As shown in FIGS. 18 and 20A, in a preferred embodiment, the passenger elements bundle 112 is positioned below the systems elements bundle 114. It will be appreciated that in another example, the PSU pod 52 and PSU pod assembly 58 can be used with overhead bins different than the clamshell design described herein. For example, the PSU pod assembly 58 can be used with other types of pivot bins or an overhead stowage bin that is fixed but includes a pivotal door. The PSU pod assembly can be used with any overhead stowage bin that includes an enclosure for luggage and a PSU channel formed integrally therewith.

In a preferred example, the PSU pod 52 preferably includes a housing 54 that includes first, second, third and fourth sides 53a, 53b, 53c and 53d, atop 53e and a bottom 53f that cooperate to define a pod interior 59, a plurality of reading lights 60 (that are aligned with and either extend through or shine light through reading light openings 54a), cabin lighting 62, a lens assembly 64 and a vent or gasper 66 defined in the housing for gasping conditioned air. It will be appreciated that the housing can be circular, ovular or elliptical in shape. For purposes of this disclosure, these shapes are considered to have first, second, third and fourth sides. In a preferred example, the PSU pod 52 is part of a PSU pod assembly 58 that includes a panel 56 that has connectors 70a (such as hooks), that mate with rails or connectors 70b that are a part of the strongback 12 and extend in a direction that is generally parallel to the axis of the aircraft. In the figures, "70" is used to designate the connection between 70a and 70b. It will be appreciated that any type of connection, such as hooks, rivets, threaded fasteners, magnets, snap fit arrangements or any other method of securing the panels 56 and PSU pod 52 to the upper housing 26 or strongback 12 is possible. The PSU pod 52 is connected to and extends or hangs downwardly from the panel 56, thereby creating the PSU pod assembly 58. In another example, the panel can be omitted and the PSU pod itself can be connected to the rails 70b. When installed in an aircraft, wires for electrical connection (to both the reading lights 60 and the cabin lighting 62) and ducting for the gasper(s) 66 extends from the PSU channel 50 through an opening 56a (or openings) in the panel 56 and down into the housing 54. The PSU pod 52 can include a flight attendant call button 72 thereon.

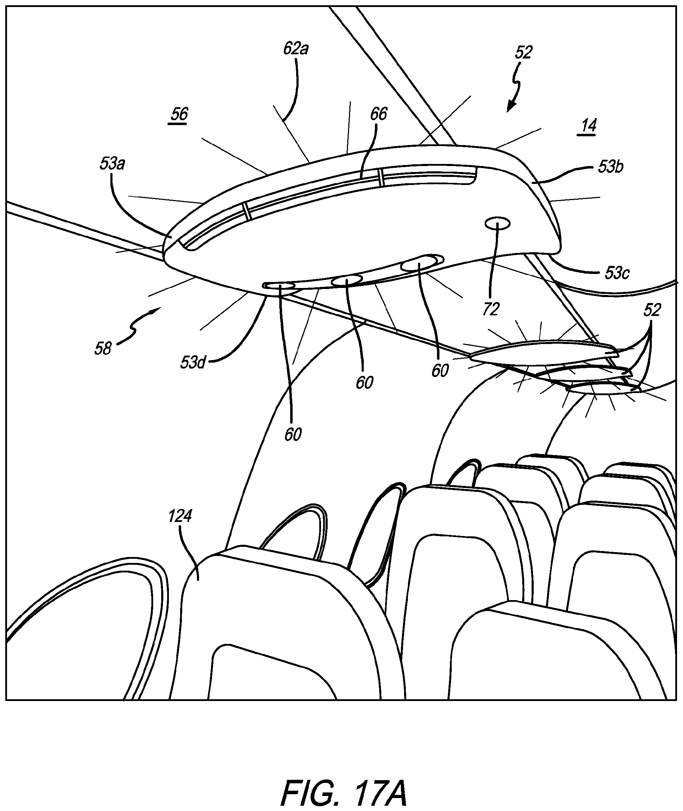

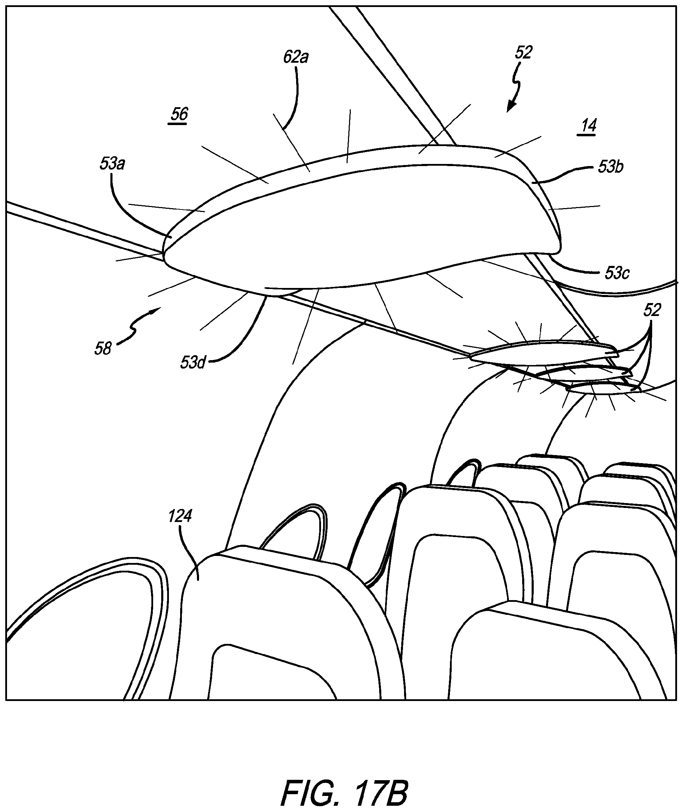

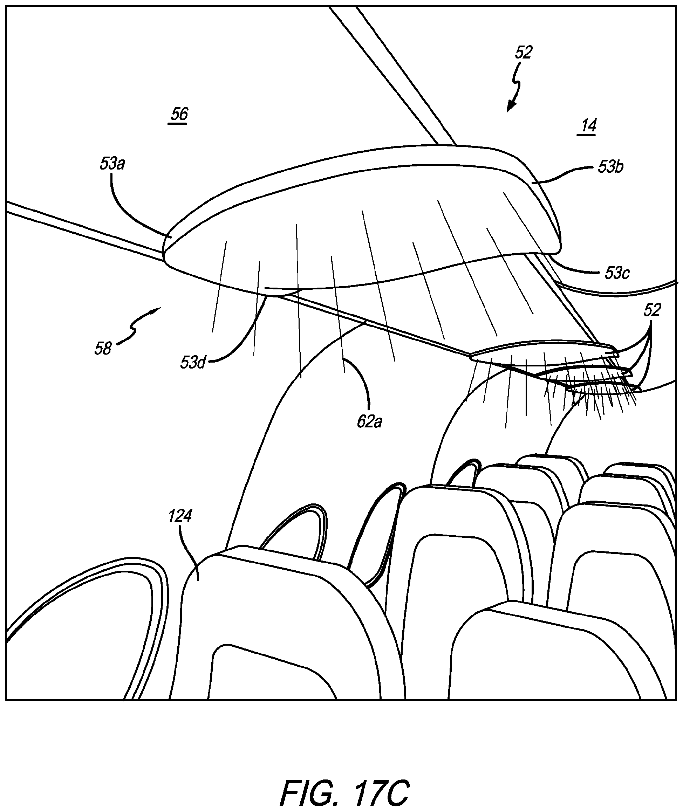

As discussed above, in a preferred example, the PSU pod assembly 58 also includes cabin lighting 62 that is associated with the PSU pod 52. The cabin lighting 62 can be any type of lighting (e.g., LEDs, incandescent, halogen, etc.) and can be positioned within or on housing 54. In a preferred example, the PSU pod assembly 58 also includes a lens assembly 64 that helps direct light that shines from the cabin lighting 62 as desired. As is best shown in FIG. 17A, the light 62a from the cabin lighting 62 shines from the top of the PSU pod 52 and washes along and down the panels 56, bucket 14 and sidewalls, etc. of the aircraft. As a result of this arrangement, in a preferred example, the PSU pods 52 provide passenger specific reading lights 60 that shine generally downwardly and outwardly and row specific cabin lighting that shines generally upwardly and outwardly. FIG. 17B shows another example, where the reading lights, vent and flight attendant call button are omitted and the PSU pod 52 includes cabin lighting shining out the first, second, third and fourth sides 53a-53d. FIG. 17C shows another example, where the reading lights, vent and flight attendant call button are omitted and the PSU pod 52 includes cabin lighting shining out the bottom of the housing 54. These example can also include the reading lights, vent and flight attendant call button. These examples all create cabin lighting specifically for each row by positioning the cabin lighting on or in the PSU pods 52.

With reference to FIGS. 20A-20B, as discussed above, generally, a passenger element bundle 112 is included in each PSU pod 52 and the systems elements 114 are disposed within the PSU channel 50 or at some other position above the ceiling defined by either the overhead bins or the panels 56 used to hide the systems elements 114. It will be understood that the systems elements 114 include both row specific elements (e.g., oxygen tanks/masks) and non-row specific elements (air ducts, electrical wiring, etc.). These elements are shown schematically in FIGS. 19A-20B as a box or bundle. However, it will be appreciated by those skilled in the art, that systems elements 114 can be located at any position along the PSU channel 50. In a preferred example, the systems elements 114 are stacked generally above the PSU pod 52 and the passenger elements 112. In other words, the PSU pod 52 is positioned below the PSU channel 50 that houses the systems elements 114. However, as discussed above, not all systems elements 114 will be positioned directly above the passenger elements 112 or PSU pod 52. In other words, the passenger elements 112 or PSU pod 52 or located at a first level and the systems elements 114 are located at a second level or height that is higher than the passenger elements 112 or PSU pod 52.

The PSU pod 52 changes the configuration and installation methodology of the prior art by using a row specific design and a completed channel 50 built in to and defined within the pivot bin assembly 10. Compared to the prior art, this helps eliminate or reduce unnecessary spacer panels. In a preferred example, each PSU pod 52 has the same pitch or alignment with respect to each row of seats 124. It will be appreciated that the positioning of the PSU pod assembly 58 can be adjusted as a result of the connection 70 between the connectors 70a and the rails 70b. In other words, the PSU pod assembly 58 can slide fore or aft on the rails 70b. Furthermore, by reducing the number of components in the PSU channel, the height of the panels can be raised (compared to the prior art), to a height H2, that is greater than the height H1 in a similar prior art aircraft. Furthermore, although the PSU pod 52 extend downwardly below the panels 56, in a preferred embodiment, it can be positioned at a height H1 that is the same or similar to the height of the prior art ceiling 120/panel 117 height. This allows the PSU pod 52 to be positioned such that the height H2 provides more passenger space or headroom than the prior art and positions the PSU pod 52 and the elements therein or thereon (e.g., reading lights, vents, cabin lighting, etc.) at a consistent position or pitch for each row of passengers. In other words, passenger headroom height between PSU pods 52 is increased when compared to the prior art. However, the positioning of the PSU pod 52 is not a limitation. In another example, they can be positioned lower than the prior art height H1 and/or they can be positioned such that they have a different pitch than each row.

In another example, the cabin lighting can be omitted or more or less reading lights can be included. The switches or buttons for the reading lights 60 can be positioned on the PSU pod 52 or elsewhere within reach of the passenger for which each reading light 60 is intended. In a preferred example, the reading lights 60 are controlled by the passengers seated in the row for which the PSU pod 52 is designated and the cabin lighting 62 is controlled by the crew from a location remote from the passengers.

With reference to FIG. 8, in a preferred embodiment, the pivot bin assembly 10 includes an environmental control system ("ECS") that includes ducting and electrical. In a preferred example, the strongback 12 serves as the enclosure of the ECS ducting. As discussed above, at least a portion of the ECS components are positioned in the PSU channel 50. However, the pivot bin assembly 10 can also include at least one further separate ECS channel 74. Electrical wire harnesses can be directly attached to the pivot bin assembly 10 instead of the aircraft for an easier and cleaner installation, when compared to the prior art. However, the ECS channel can be omitted and the ducting, electrical, etc. can be connected to the aircraft in another example.

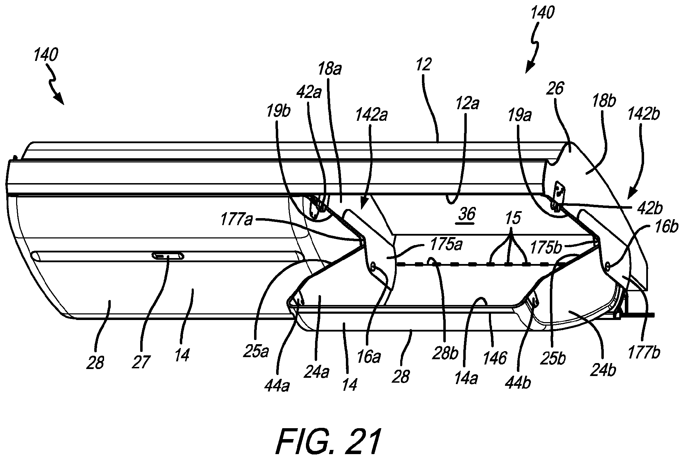

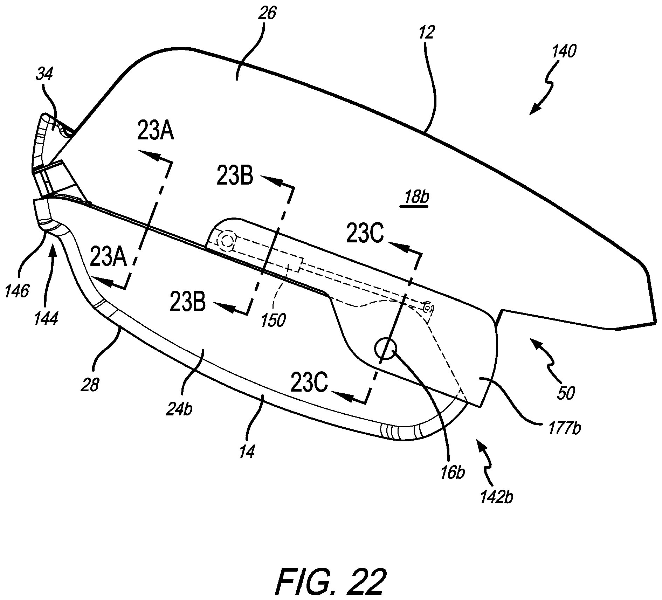

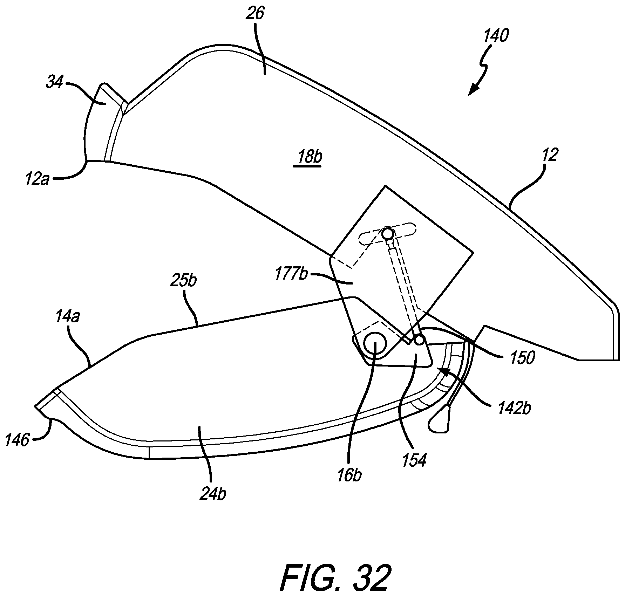

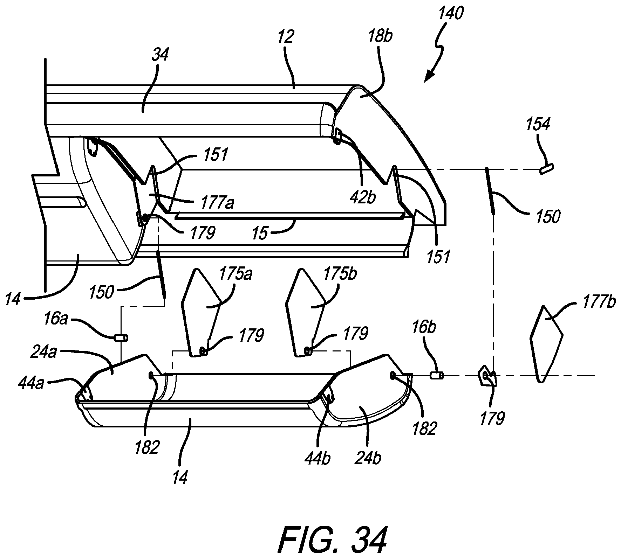

With reference to FIGS. 21-34, another example of a pivot bin assembly 140 is shown. Pivot bin assembly 140 is similar to the pivot bin assembly 10 shown in FIGS. 116, however, the ears and corresponding indented portions are omitted and are replaced with clevis assemblies 142a and 142b that pivotally connect the upper housing 26 and the bucket 14. In other words, instead of integral ears extending downwardly from the upper housing, the clevis assemblies 142a and 142b (together with the pivot axles 16a and 16b) provide the pivotal connection of the bucket to the upper housing. It will be appreciated that most of FIGS. 22-34 do not include latch assemblies. However, the latch assemblies described above and shown in connection with pivot bin assembly 10 can be used with pivot bin assembly 140. In another example, other latching mechanisms can be used.

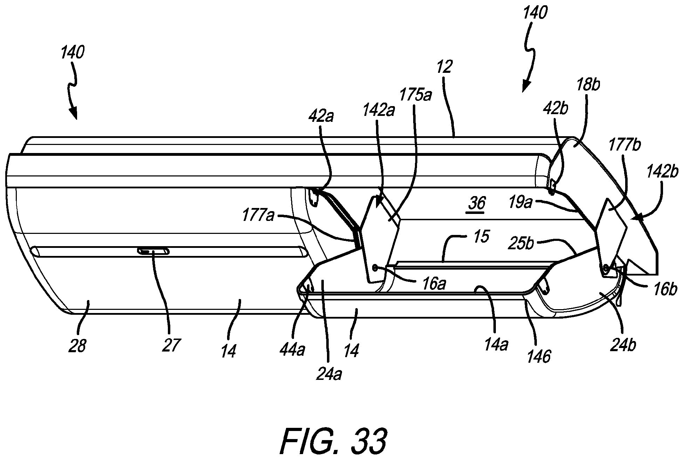

As shown in FIG. 21, pivot bin assembly 140 generally includes strongback 12, a tray or bucket 14 (or buckets) with a first and a second pivot mechanism or pivot axle 16a and 16b on each side, and first and second side panels 18a and 18b and first and second clevis assemblies 142a and 142b. With respect to each pivot bin assembly 140, the strongback 12 and first and second side panels 18a and 18b are referred to herein together as the upper housing 26. Generally, the pivot bin assembly 140 includes the upper housing 26, which includes the strongback 12 and the first and second side panels 18a and 18b, and the bucket 14. The bucket 14 and upper housing 26 cooperate to define a bin interior 36. In a preferred example, the bucket 14 defines the lower portion of the bin interior 36 and the upper housing defines the upper portion of the bin interior 36. As shown in FIG. 21, in a preferred example, the pivot bin assembly 140 includes a plurality of stop members 15 positioned on the strongback 12 and the bucket 14 that stop the bucket 14 from opening further than the preferred opening position (described below). In another example, the stop members 15 can be a long strip that spans most or all of the back of the bucket 14 (see FIGS. 33-34). In another example, the stop members 15 can be located elsewhere.

In the example shown in the figures, the strongback 12 and first and second side panels 18a and 18b are separate components. However, in another example, the strongback 12 and first and second side panels 18a and 18b (the upper housing 26) can be a unitary component. In a preferred example, the pivot bin assembly 140 includes a single piece bucket 14 that includes a bottom 28 and first and second opposing sides 24a and 24b. In another example, the bucket 14 can include multiple pieces, e.g., a three piece design that includes the bottom 28 and first and second opposing sides 24a and 24b as separate components. Similar to the examples described above, it will be appreciated by those of ordinary skill in the art that the bucket 14 and upper housing 26 provide a "clamshell design," where at least a portion of the bottom edge 19a of the first side panel 18a and the bottom edge 19b of the second side panel 18b meet edge to edge with or abut one another and the front bottom edge 12a of the strongback 12 meets edge to edge with or abuts the top edge 14a of the bucket 14. In a preferred example, in the closed position, other than the rear top edge 28b of the bottom 28 of the bucket 14 and the area adjacent thereto and the strongback 12, there is little to no overlap between the bucket 14 and the upper housing 26. In other words, in a preferred example, the bucket 14 does not enter the upper portion of the bin interior 36, which is defined by the upper housing 26, when the bucket 14 is pivoted to the closed position.

When the bucket 14 is pivoted to the closed position, the first and second sides 24a and 24b of the bucket 14 are not received in the upper portion of the bin interior 36. In other words, the first top edge 25a of the first side 24a of the bucket 14 does not pass or overlap with the first bottom edge 19a of the first side panel 18a when the bucket 14 is pivoted to the closed position. And, the second top edge 25b of the second side 24b of the bucket 14 does not pass or overlap with the second bottom edge 19b of the second side panel 18b when the bucket 14 is pivoted to the closed position. Preferably, the first top edge 25a abuts the first bottom edge 19a, and the second top edge 25b abuts the second bottom edge 19b. However, an example is possible where the first and second top edges 25a and 25b and first and second bottom edges 19a and 19b or the front bottom edge 12a of the strongback 12 and front top edge 28a of the bucket 14 are horizontally separated from one another, but, in a vertical direction, the first and second top edges 25a and 25b do not pass or overlap with the first and second bottom edges 19a and 19b and/or the front bottom edge 12a and front top edge 28a do not pass or overlap when the bucket 14 is pivoted to the closed position.

As shown in FIGS. 21-34, first and second side panels 18a and 18b include first and second clevis assemblies 142a and 142b that house first and second pivot mechanisms 16a and 16b together with other components as described below. Generally, first and second pivot mechanisms 16a and 16b are operatively associated with the bucket 14, and allow the bucket 14 to pivot with respect to the upper housing 26 between an open position and a closed position. It will be appreciated that the first and second pivot mechanisms 16a and 16b or axles define a pivot axis. In a preferred example, the first and second pivot mechanisms 16a and 16b are axially aligned.

As shown in FIGS. 21-22, in a preferred example, pivot bin 140 includes a connecting unit 150 (described more fully below) on each side thereof, that, together with first and second pivot bin mechanisms 16a and 16b are housed within clevis assemblies 142a and 142b. First and second clevis assemblies 142a and 142b are connected to the first and second side panels 18a and 18b and extend downwardly to surround a portion of the sides first and second sides 24a and 24b of bucket 14. In this example, the pivot axles 16a and 16b are essentially the clevis pins and the clevis is comprised of an inner plate 175 and an outer plate 177 that each include an opening 179 therein, through which the pivot axle/pin 16 extends.

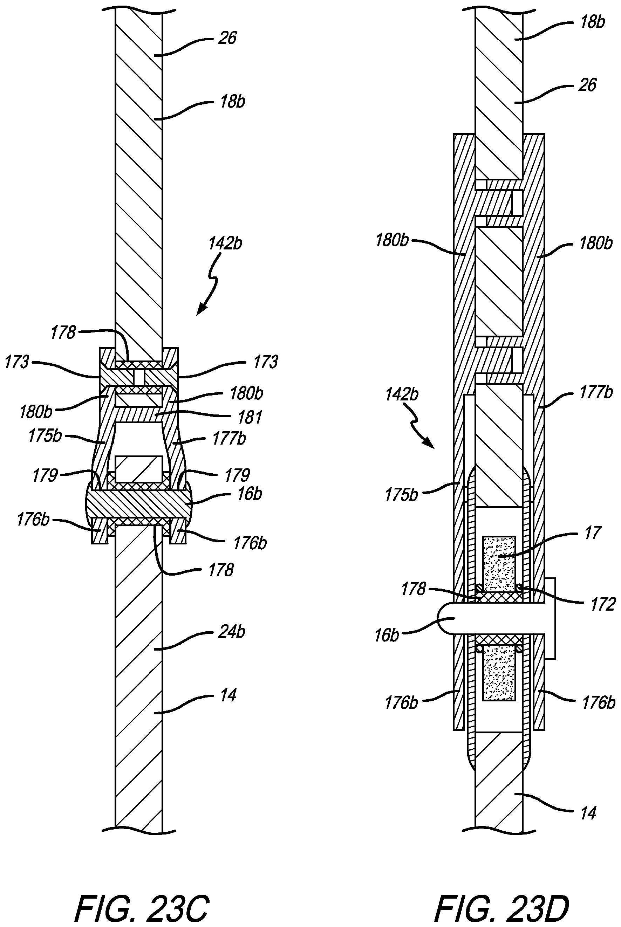

With reference to FIG. 23C, pivot axle 16b extends through lower arms 176b of the clevis assembly 142b, which, together with the clevis assembly and pivot axle on the other side of the bucket 14 provide a pivotal connection between the upper housing 26 and the bucket 14. The first and second clevis assemblies 142a and 142b can be connected to the upper housing 26 and bucket 14 by fasteners, threaded fasteners, bonding or the like. In another example, the clevis assemblies 142a and 142b are integral with the upper housing 26. In another example, the clevis assemblies can be integral with the bucket 14 or can be attached/secured to the bucket and the pivot axles can extend through the upper housing. As shown in FIG. 23C, in a preferred example, second clevis assembly 142b includes threaded fasteners 173 that extend into a bushing 178 positioned in an opening in the side 18b. Pivot axle 16b can also extend through a bushing 178 positioned in openings 179 in the inner and outer plates 175 and 177 and an opening 182 in the side of the bucket 14. In another example, bushing 178 can be omitted. It will be appreciated that the clevis assemblies 142a and 142b (and the inner and outer plates 175 and 177 thereof) can each be a unitary structure or they can be a plurality of plates that together form the clevis assembly. As shown in FIG. 23C, the clevis assembly can include a horizontal plate 181 that connects the inner and outer plates 175 and 177. In another example, the pivot axle can be unitary with or secured to the inside surfaces of the inner and outer plates/lower arms or at least one of the inner or outer plates/lower arms. In another example, the clevis assemblies can include a single inner or outer plate that extends between and is secured to the upper housing and the bucket.

As shown in FIG. 23D, in an example that includes the rotary damper 17 and/or an assist spring 172 (described below), these components are also housed within the clevis assembly 142b. FIG. 23D also shows clevis assembly 142b including connectors that are unitary with the inside surface of upper arms 180b of the clevis.

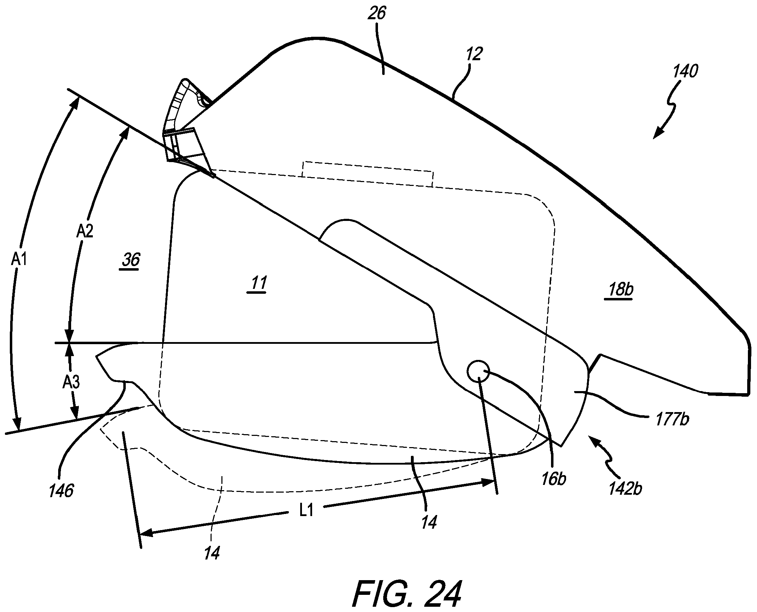

In a preferred example, the pivot bin assembly 140 includes a system that provides a user with assistance in closing an open bucket 14 with a predetermined minimal amount of force, and may also provide the means for a fully loaded closed bucket 14 to open in a controlled manner (damped). This can be accomplished in several ways. FIGS. 24-30 show a preferred example for providing these features. Within the aircraft industry certain dimensions, weights, forces and other measurements, etc. are required or desired for opening and closing overhead bins and for the forces necessary for particular sized men and women to close the bins. Such considerations are taken into account in the description herein. However, it will be appreciated that the particular numbers, measurements, dimensions, etc. set forth herein are only exemplary and not limiting.

FIG. 24 shows a side view of pivot bin assembly 140 in the open position. Two different open positions for the bucket 14 are shown. This is referred to herein as a two stage opening bucket or bin. The position shown in the solid lines is the bucket 14 in the open position when the pivot bin is empty (referred to herein as the "intermediate open position"). The position shown in dotted lines is the bucket 14 in the open position when the pivot bin is loaded beyond a predetermined weight (referred to herein as the "open position"). The bucket 14 can open fully to a certain angle or arc, which is shown in FIG. 24 as A1. When the bucket 14 is open to A1, it is in the open position (stop members 15 maintain the bucket 14 in the open position). When the bucket 14 is in the intermediate open position (which is a resting position, not just a position taken as a "snapshot" while the bin is opening) it has moved through an angle or arc labeled A2 in FIG. 24. The angle or arc between the intermediate open position and the open position is shown as A3 in FIG. 24. In an example, A1 is 42°, A2 is 31° and A3 is 11°. However, these angles are not a limitation. For example, in another example, A1 can be between 30° and 60°, A2 can be between 20° and 40° and A3 can be between 5° and 20°. An assist spring or springs can be used to hold the bucket 14 in the intermediate open position, as will be described further below. In another example, the two-stage opening can be omitted and the bucket 14 can open all the way through arc A1 when opened.

In a preferred example, the bin is damped when opened. This prevents the bucket 14 from slamming open as a result of gravity. Damping can be provided in several ways, as described below.

In a preferred example, a closing assist force is provided along at least a portion of the closing arc of the bucket 14 (shown as an exemplary A3 in FIG. 24). As a result, when the bucket 14 is empty, the bucket 14 will be positioned in the intermediate open position. However, when the bucket 14 is loaded with a predetermined weight of luggage or when a user pulls down with enough force to overcome the spring force, the bucket 14 will be positioned in the open position. When a user pushes to close the bucket 14, the closing assist force created by the preloaded spring will help along arc A3, which is the portion of the closing arc that requires the most force by a user.

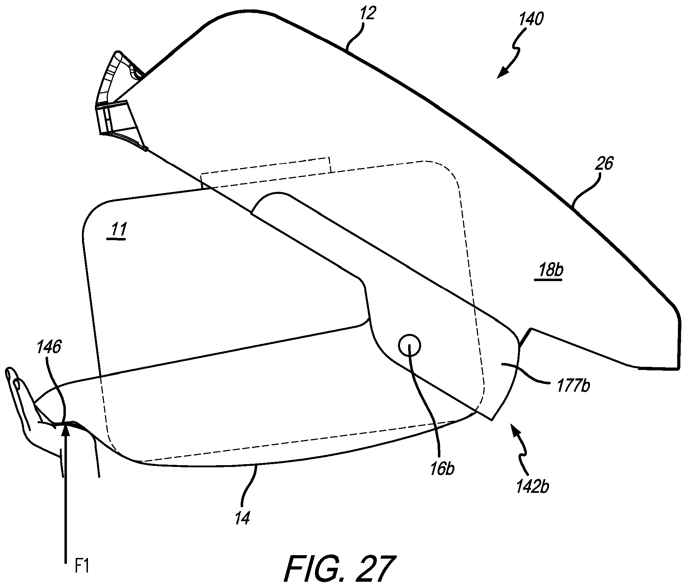

As is shown in FIGS. 24-27, in a preferred example, pivot bin assembly 140 also provides a closing channel 144 that defines a closing surface 146 that when contacted or pushed by a user defines a closing point lever arm LI. In the prior art, oftentimes, a user places their hand somewhere in the middle of a pivot bin in an attempt to close it. However, with the closing channel 144 defined in the bucket 14, a user will be inclined to press on the closing surface 146 to close the bucket 14. The closing surface 146 is located on the bucket 14 at an area that is relatively far from the pivot point, therefore providing a longer closing point lever arm Ll (than if a user places their hand in the middle of the bucket). This makes it easier for the user to close the bucket 14 than if they pushed on the bucket 14 at a point closer to the pivot point. When the bucket 14 is in the intermediate open position or (fully) open position, the closing surface 146 is also oriented such that the application of the closing force on the closing surface 146 by a user will generally be in line with the closing motion of the bucket 14 (see arrow Fl in FIG. 27). This positioning and orientation of the closing surface 146 helps ensure that the user pushes at an efficient point, which generally is a point far from the pivot point and close to perpendicular of the lever arm.

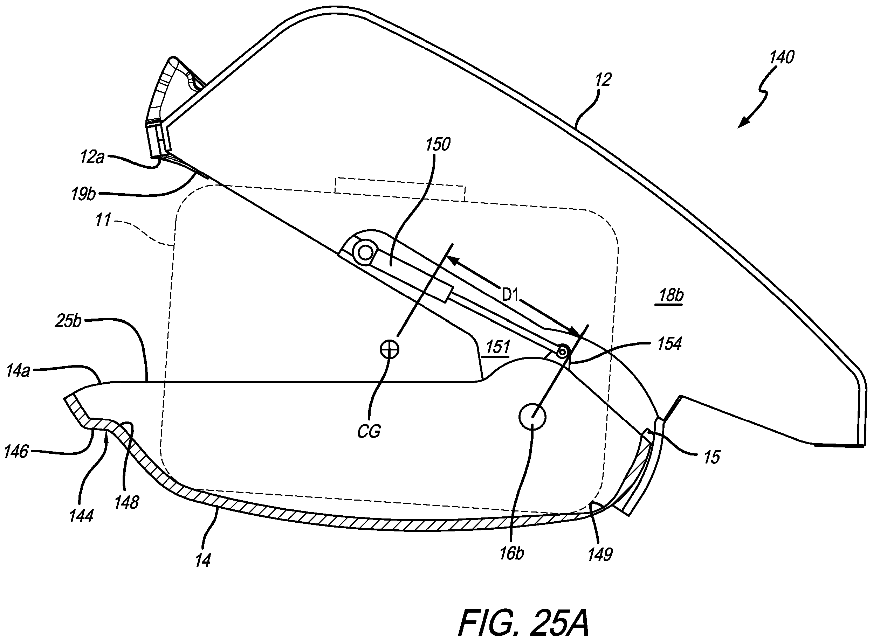

In a preferred example, as shown in FIGS. 25A-25B, the bucket 14 is also shaped such that the center of gravity CG of the luggage is positioned for easier closing of the bucket 14. When compared with the prior art pivot bins in most aircraft, the bucket 14 is shaped to position the luggage within the bucket so that the center of gravity of the luggage is closer to the pivot point. In a preferred example, this is achieved by providing an integrated ramp 148 at the leading edge of the bucket 14 which ensures the proper position of the luggage (more outboard on a single aisle aircraft) during the start of the upward motion (where a user experiences the highest hand loads). As shown in FIG. 25A, preferably, the ramp 148 is essentially the inverse of the closing channel 144.

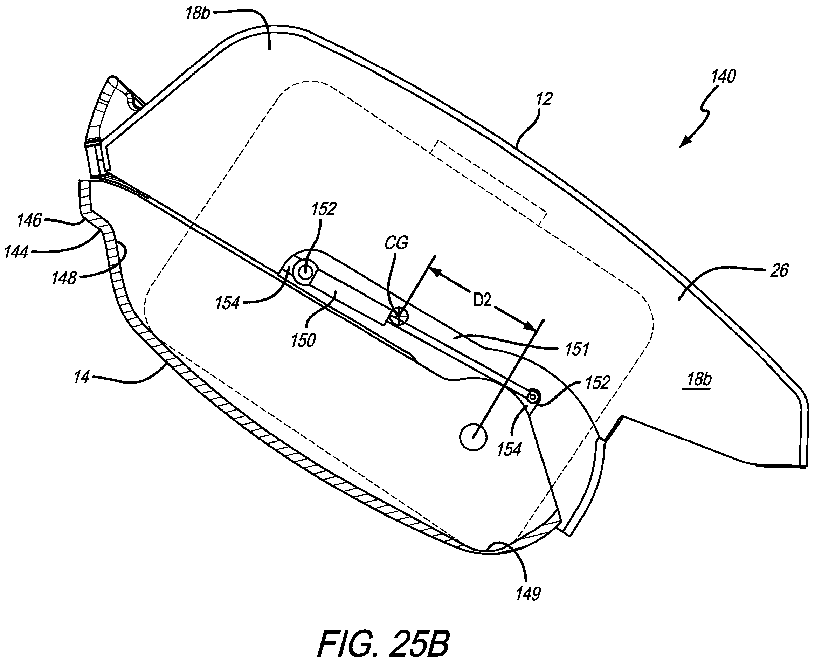

As shown in FIG. 25A-25B, in a preferred example, a local "crush" of the bucket 14 or luggage indentation 149 is defined in the inner surface of the bucket to allow the luggage 11 to move or shift further outboard when the bucket 14 is closed. This movement can be seen in a comparison of FIGS. 25A and 25B, which show the distance from the center of gravity CG of the luggage 11 to the pivot point as D1 and D2, where D2 is shorter. The luggage indentation 149 is localized around the outboard lower corner of the luggage 11.

As discussed above, the damping and closing assist can be provided in a number of different ways. As shown in FIGS. 25A-25B, in a preferred example, the pivot bin assembly 140 includes a connector unit 150 that is connected at one end to the bucket 14 and at the other end to the upper housing 26 (preferably, one of the side walls 18). As shown in FIG. 25B, in a preferred example, the connector unit 150 is positioned in a cut out 151 in the side 18b of the upper housing 26. The connector unit 150 generally can be used for either one or both of damping the opening of the bucket 14 or assisting with the closing of the bucket 14.

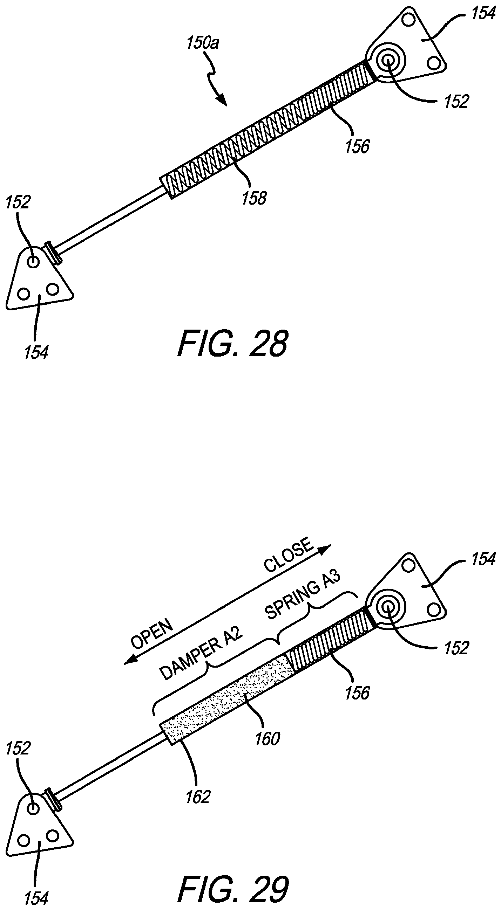

FIGS. 28-29 show schematic views of connector units 150a and 150b. Both connector units 150a and 150b include pivotal connections 152 (e.g. ball joints) at the opposite ends thereof that connect the unit to brackets 154 or the like that is located on the bucket 14 and the side wall 18 respectively. In use, the connecting units 150 pivot about pivotal connections 152 as necessary and lengthen or contract as necessary during opening or closing of the bucket 14. Connecting unit 150a includes two different springs 156 and 158 that are used to provide closing assist over two different portions of the closing arc A1. In another embodiment, a variable or two stage spring can be used to provide the same result. These two different portions may coincide with arcs A2 and A3 or they may not. In another embodiment, connecting unit 150a can also include damping capability. Connecting unit 150b includes closing assist over at least a portion of closing arc A1 and also provides damping during opening of the bucket 14. As shown in FIG. 29, in a preferred example, spring assist is provided over closing during bucket travel along A3 and damping while opening over at least A2 (and preferably all of Al). Damping can be provided in any known way. In an example, damping is provided by fluid 160 disposed within a cylinder 162, as shown in FIG. 29. Pneumatic or gas cylinders can also be used.

As will appreciated by those of ordinary skill in the art, closing of the bucket 14 is most difficult at the beginning of the process (e.g., A3, as shown in FIG. 24). Therefore, the connecting units 150 preferably provide a spring lift assist during at least this portion of the closing process.

It will be appreciated that connecting units 150 are provided on both sides of the bucket 14 and can be connected to the bucket 14 and upper housing 26 by any connection method or interface and preferably using brackets 154 with an opening therethrough or a stud extending therefrom.

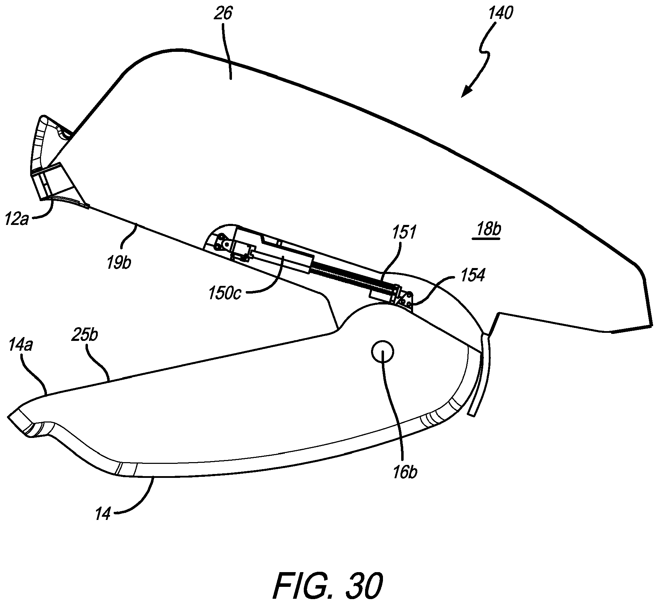

In another preferred example, as shown in FIG. 30, the pivot bin assembly 140 can include a powered lift assist connecting unit 150c, which provides powered lift assist over at least a portion of or the entire closing arc A1. Powered opening/damping can also be provided. Preferably, when powered lift assist is desired, a powered lift assist connecting unit 150c is used on one side of the bucket 14 and a connecting unit 150 with only damping capability is used on the other side of the bucket 14. In another example, powered lift assist connecting units 150c can be used on both sides of the bucket 14. It will be appreciated that all of the connecting units 150a, 150b and 150c (and any connecting units 150 with only damping capability) are all interchangeable and use the same interface (e.g., brackets 154) to connect to the bucket 14 and upper housing 26. In an example, the brackets 154 may have to be moved to accommodate the powered lift assist connecting unit 150c as opposed to the other connecting units 150. It will be appreciated that the powered lift assist connecting unit 150c is in electrical communication with the release button 27 of the associated bucket 14. In another example, a separate button for closing can be provided.

FIG. 23D shows another example that provides damping of the opening bucket and/or mechanical/spring assistance in closing the bucket 14. FIG. 23D is a cross-section that is taken at the same cut line as FIG. 23C in a pivot bin assembly with the embodiment now being described. As shown, the pivot assembly 142b includes a rotary damper 17 (as described above), and at least one assist spring 172. In a preferred example, the assist spring 172 is a coil spring that is co-axial with pivot axle 16. In use, at least one end of the spring abuts a stop such that when the bucket 14 is opened passed a predetermined point (e.g., after A2), the spring 172 is preloaded. In the example shown in FIG. 24, spring 172 holds the empty bucket in the intermediate open position. Once a user pulls down or a bag of sufficient weight is placed on the bin, the bucket opens further and spring 172 is preloaded. This provides a user closing the bin with assistance. It will be appreciated that once the bucket 14 is loaded, the bucket 14 only moves between the open and closed positions. In this configuration it bypasses the intermediate open position as the weight of the luggage overcomes the spring force.

In another example, the assist spring 172 can be a spiral spring or other type of spring. This example can include the same benefits as those discussed above with respect to the various connecting units 150. For example, coil spring 172 can provide closing assist over a portion of the closing arc or over the entire closing arc or a variable/two stage spring or multiple springs can be used to provide differing amounts of closing force assistance over the closing arc. Furthermore, rotary damper 17 can provide damping during a portion or all of the opening arc. In a preferred embodiment of the present invention, the pivot bin assembly 140 includes any of the connecting units 150 discussed above and rotary dampers 17 with coil springs 172. For example, in this example, closing assist can be provided during one portion of the closing arc by coil springs 172 and during another portion of the closing arc by spring 156 in connecting unit 150.

In summary, the pivot bin assembly 140 can include a) damping capability, b) damping capability and closing assist, c) damping capability and two or more stage closing assist, or d) damping capability and powered lift assist.

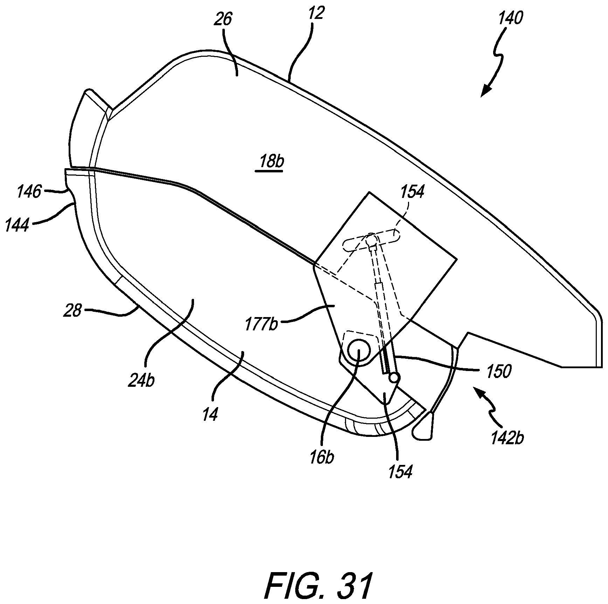

FIGS. 31-34 show another arrangement of the clevis assemblies 142a and 142b together with the cut out 151 in the side 18b of the upper housing 26 and the connecting unit 150. In this embodiment, inner plates 175a and 175b and outer plates 177a and 177b and cut outs 151 are shaped differently and connecting units 150 are oriented differently. Also, the pivot axles 16a and 16b extend through the lower brackets 154. However, this example operates the same as that described above.

Generally, when a two stage opening bucket/bin is in use, when the latches are released, the damping capability of the pivot bin assembly 10 or 140 allows damped opening of the bucket 14 to an angle (the intermediate open position) that provides easy access for most luggage, even when empty. Furthermore, compared to the prior art, in the intermediate open position, the pivot bin assemblies 10 or 140 increase the headroom in the cabin when the buckets 14 are open and empty (in the intermediate open position). Next, once passenger luggage 11 is positioned on the lip of the bucket 14 or once a typical bag/ luggage is in the bucket 14, the bucket 14 will drop to the open position in a controlled/damped manner. This allows for placement of all luggage sizes.

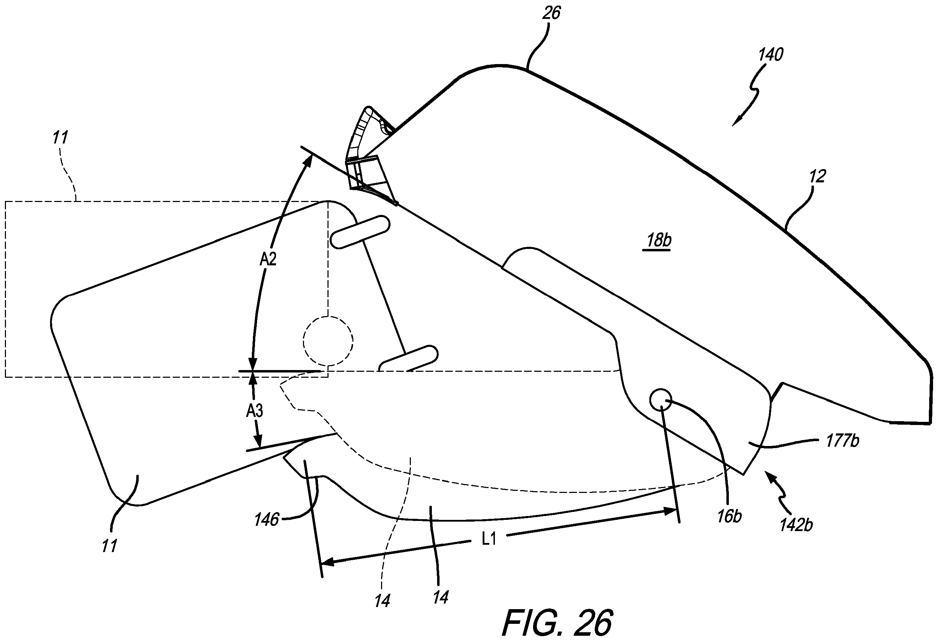

With reference to FIGS. 24-27, an example of an operation cycle of loading and unloading a two stage opening bucket or bin with luggage before and after a flight will now be described. As discussed above, all angles, weights, loads, dimensions, times, etc. used herein are exemplary. First, the release button 27 of an empty bucket 14 is pressed by a user. The bucket 14 opens 31° (A2) at a damped rate to the intermediate open position (see the bucket in dashed lines in FIG. 26). The springs (springs 156 in the connector assemblies and/or coil springs 172) are now ready to be engaged. The user then places luggage 11 on the lip of the bucket 14 (or pulls down with their hand). The potential energy from the luggage 11 lowers the bucket 14 through an additional 11° (A3) to the open position, which displaces the springs 156, 158 and/or 172 on both sides of the bucket 14 and loads them with enough energy to create 17.6Nm (13 ft-lbs) of torque (for example). The user then slides their luggage fully into the bucket 14 (see FIG. 27). To accommodate more luggage, the users bag is preferably turned so that it rests on a side. In a preferred example, the bucket 14 is damped while it is lowered.

Assuming other luggage has now been placed in the same bucket 14, in this scenario, the bucket 14 is now completely filled and the luggage weighs approximately 39.9kg (88 lbs) in total. As shown in FIG. 27, a user now pushes approximately vertically on the closing surface 146 with approximately 12.2 kg (27 lbs) of force (see arrow F1). The springs 156 and/or 172 apply an assist load of 3.2kg (7 lbs) over the first 11° of the bucket 14 closing arc (A3). The user then continues pushing the bucket 14 closed through the remaining 31° (A2). In the example with a variable spring or with a second spring 158, assist can also be provided over some or all of the remainder of the closing arc. As can be seen in FIG. 27, Fl is approximately vertical. With the orientation of the bucket 14 shown in this example, the closing surface 146 is configured such that it is parallel or close to parallel with the ground. This prompts a user to press up in the direction of Fl, which makes closing the bucket easier than pushing elsewhere on the bucket or pushing on a surface that is at a steep angle compared to horizontal.

After the flight (or at any time during the flight), to open the bucket 14, the user presses the release button 27 and the fully loaded bucket 14 opens the full 42° (A1) to the open position at a damped rate. The user can then pull their luggage 11 from the fully opened bucket 14.

In an example, the bucket 14 free falls from the closed to open position in 2.5±1 seconds while loaded with luggage anywhere between 0-36.3kg (0-80 lbs) in weight. In the exemplary scenarios given herein the bucket 14 itself weighs approximately 4.5kg (10 lbs). This results in a combined weight range of 4.5-40.8kg (10-90 lbs) (but could be higher). In an exemplary closing force scenario it is desired for the closing force (provided by the user) not to exceed 12.2kg (27 lbs). In order to achieve this, a closing assist force of approximately 3.2kg (7 lbs) is provided over the first 11° (A3) of the bucket 14 closing motion. This equates to approximately 17.6Nm (13 ft-lbs) of torque at the pivot point.

As shown in FIG. 26, the two stage opening bucket also provides for two different orientations for placing standard luggage in the bin interior 36. In a preferred example, A2 is dimensioned such that when the bucket 14 is in the intermediate open position, a bag can be placed in the bucket 14 on its top or bottom, as shown in dashed lines in FIG. 26 and A1 is dimensioned such that when the bucket 14 is in the open position, a bag can be placed in the bucket 14 on its side, as shown in solid lines in FIG. 26. In another example, when the bucket 14 is in the intermediate open position, a user can place their bag on the lip of the bucket 14 on its top or bottom, allow the weight of the bag to open the bin to the open position and then turn the bag on its side and slide it all the way into the bin interior 36. It will be appreciated that the two stage opening capability can be applied to other overhead bins, e.g., bins that open by translating or moving downwardly as opposed to pivoting open.

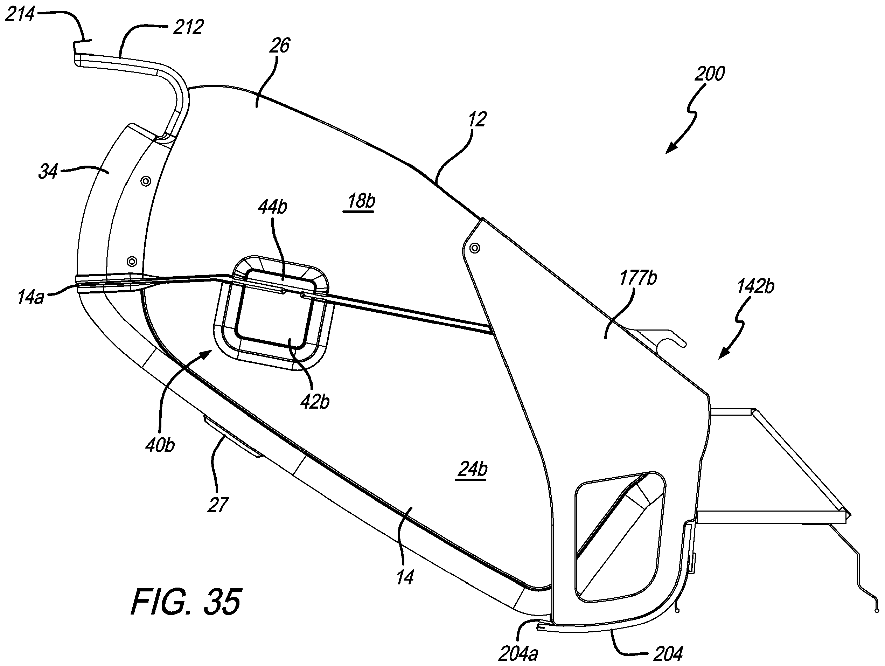

FIGS. 35-42 show another example of a pivot bin assembly 200. Like numerals in FIGS. 35-42 refer to like components in FIGS. 1-34. In an example, pivot bin assembly 200 can be used on smaller jets made by companies like Embraer where aisle space is desirable. However, this is not a limitation on the present invention, and the pivot bin assembly 200 can be used where desired.

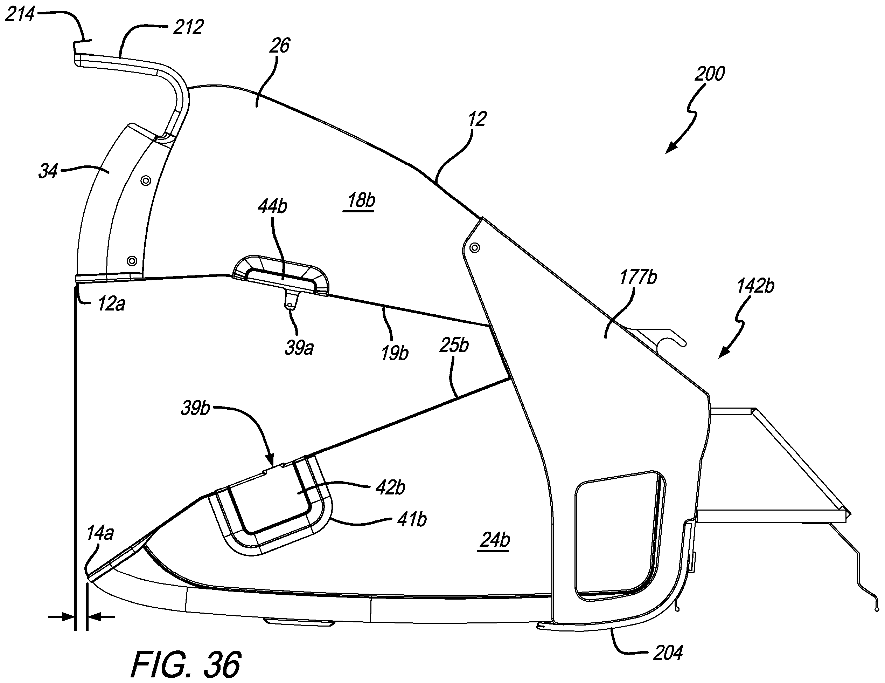

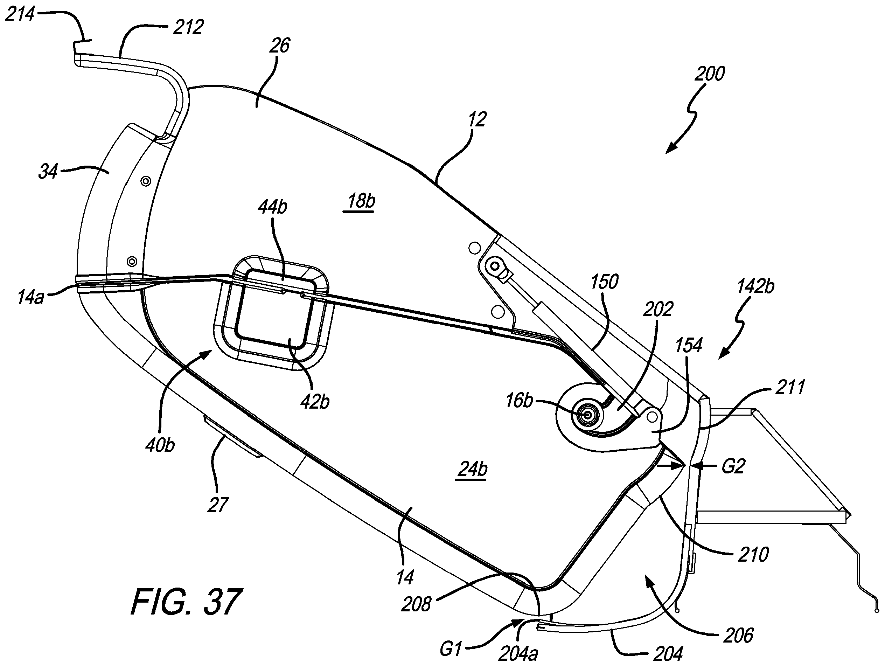

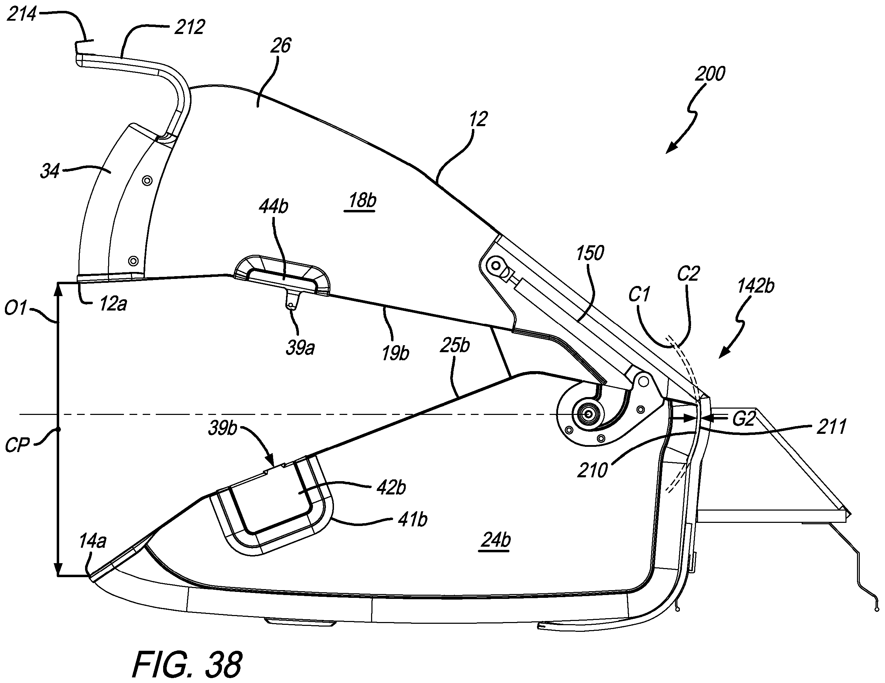

Generally, the pivot bin assembly 200 includes upper housing 26 that includes first and second side panels 18a and 18b, and bucket 14 pivotally connected to the upper housing 26 by first and second clevis assemblies 142a and 142b. FIGS. 35 and 37 show the bucket 14 in the closed position, but FIG. 37 has the outer plate 177b of the clevis assembly 142b omitted to show the components therebehind. FIGS. 36 and 38 show the bucket 14 in the open position, but FIG. 38 has the outer plate 177b of the clevis assembly 142b omitted to show the components therebehind. It will be appreciated from a review of the arrows shown in FIG. 36, that the geometry of the pivotal connection between the bucket 14 and the upper housing 26 causes the top edge or lip 14a of the bucket 14 to be positioned outboard (away from the center aisle) in the open position compared to when it is in the closed position. The geometry that provides the outboard pivoting is also shown in FIG. 38, which shows a vertical line that demonstrates the vertical opening distance of the bucket 14 between the open and closed positions (labeled 01), a horizontal line extending through the pivot point or pivot axis, and the center point CP of the vertical opening distance 01. As shown, the pivot point horizontal line extended is positioned vertically above the center point CP of the vertical opening distance 01.

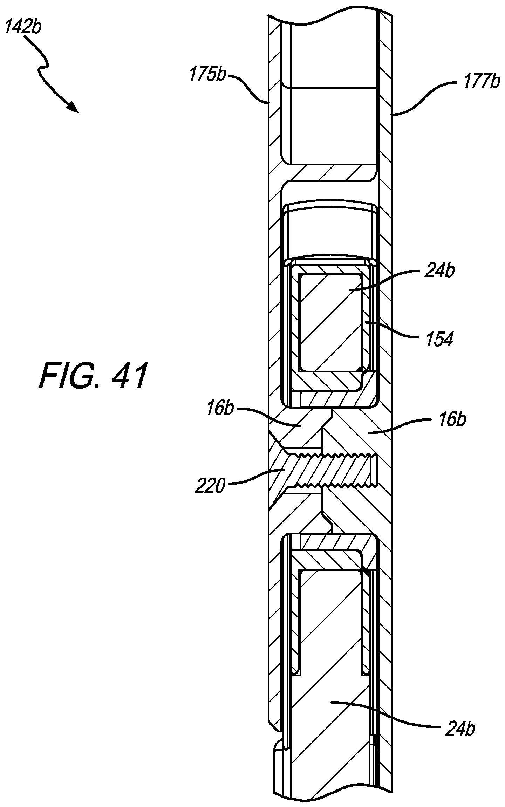

Also, compare D3 and D4 in FIG. 41, which shows two pivot bin assemblies 200 on opposite sides of an aisle. D3 shows the distance between the front or inboard edges of the buckets 14 in the closed position and D4 shows the distance between the front or inboard edges of the buckets 14 in the open position. D3 is greater than D4. Described with respect to a single pivot bin assembly 200, the horizontal distance D5 between a vertical line that extends through the pivot point and the front edge of the bucket in the closed position is greater than the horizontal distance D6 between the vertical line that extends through the pivot point and the front edge of the bucket in the open position.

As shown in FIG. 37, in a preferred example, the bucket 14 includes a curved raceway or slot 202 defined in the side panel 18b (and in side panel 18a) that receives the pivot mechanism 16b and a bushing 178. This provides the ability to disconnect bucket 14 from the upper housing 26 with minimal disassembly. In a preferred example, the upper housing 26 includes an extension member 204 that extends downwardly and inwardly therefrom. When the bucket 14 is in the closed position, the extension member 204 defines an opening space 206 that receives a portion of the bucket 14 when the bucket 14 is pivoted to the open position, as shown in FIG. 38. The extension member 204 also includes a front edge 204a that defines a gap G1 with a bottom corner 208 of the bucket 14. In use, gap G1 is sized to prevent users from placing fingers or other objects between the extension member 204 and the bucket 14. This example also shows the parts of the latch assemblies 40a and 40b reversed compared to the previously described embodiments. As shown in FIGS. 35-40, the second striker portion 44b is positioned on the top with the striker 39a extending downwardly from the bottom edge 19a of the side panel 18b, and the second hook portion 42b is positioned on the bottom and within recess 41b. The striker 39a is received in an opening 39b and the hook in the

As shown in FIGS. 37-38, in a preferred example, gap control is provided between the upper rear edge of the bucket 14 and the inner surface of the back 12 of the upper housing 26. In use, a gap G2 is provided and sized to prevent users from placing fingers or other objects (luggage, coats, etc.) between the upper rear edge of the bucket 14 and the inner surface of the back 12 of the upper housing 26. In a preferred example, the rear portion of the bucket 14 includes a bulge portion 210. The bulge portion 210 has an outer surface that is shaped to define a circle C1 having the pivot point as its center. The back 12 of the upper housing 26 includes an indented portion 211 adjacent to and spaced from the bulge portion 210. The indented portion 211 has an inner surface that is shaped to define a circle C2 having the pivot point as its center. The radius of C2 is larger than the radius of C1. The bulge portion 210 and the indented portion 211 work together to provide a generally constant clearance or gap G2 between the upper rear portion of the bucket 14 and the inner surface of the upper housing 26. As shown in FIGS. 37-38, the remainder of the rear portion of the bucket is not curved like the bulge portion 210 and neither is the portion of the upper housing 26 below the indented portion 211.

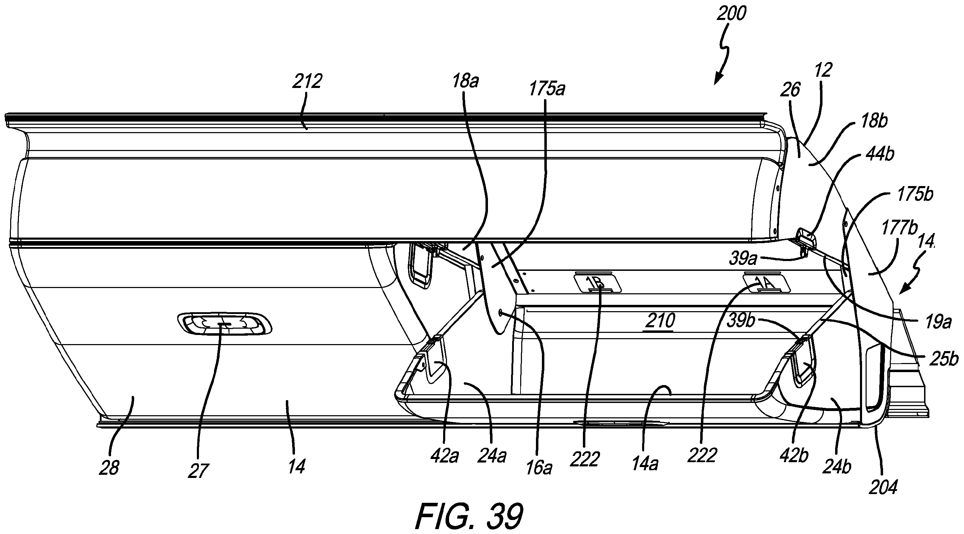

As shown in FIG. 39, in a preferred example, the pivot bin assembly 200 includes seat indicia 222 that specify the portion of the bin interior that is designated for a particular passenger. For example, as shown in FIG. 39, the seat indicia 222 includes 1A and 1B, thereby specifying that the portion of the bin interior adjacent thereto is designated for the passengers seated in seats 1A and 1B, respectively.

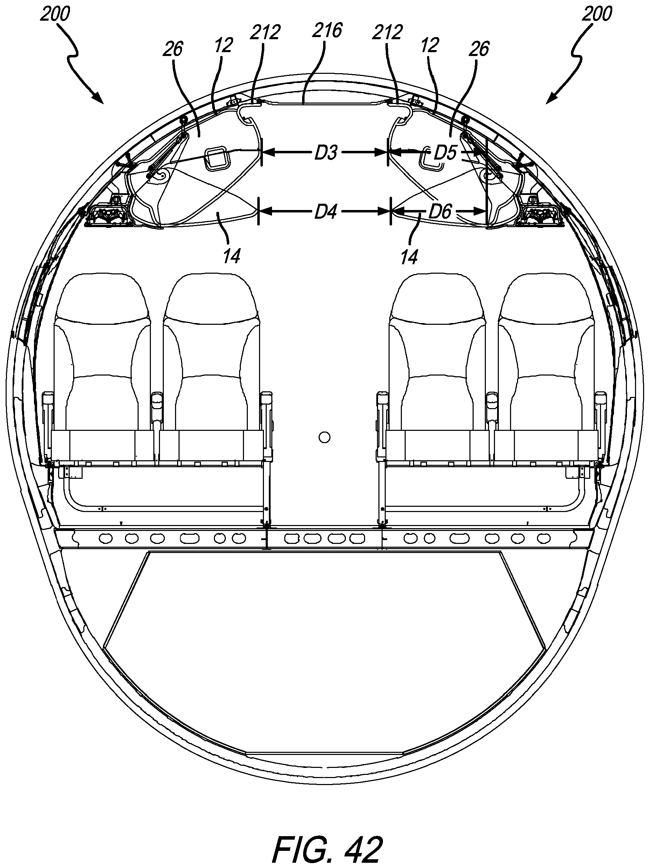

In a preferred example, the pivot bin assembly 200 includes a top closeout member 212 extending upwardly and outwardly from the upper housing 26. As shown in FIG. 42, when the pivot bin assembly 200 is installed in an aircraft, the top closeout member 212 spans the space between upper housing 26 and the ceiling of the aircraft. Preferably, the top closeout member 212 includes a bracket 214 for connection to the ceiling. As shown in FIG. 42, in a preferred example, a single ceiling panel 216 extends between the brackets 214 on opposite sides of the aisle.

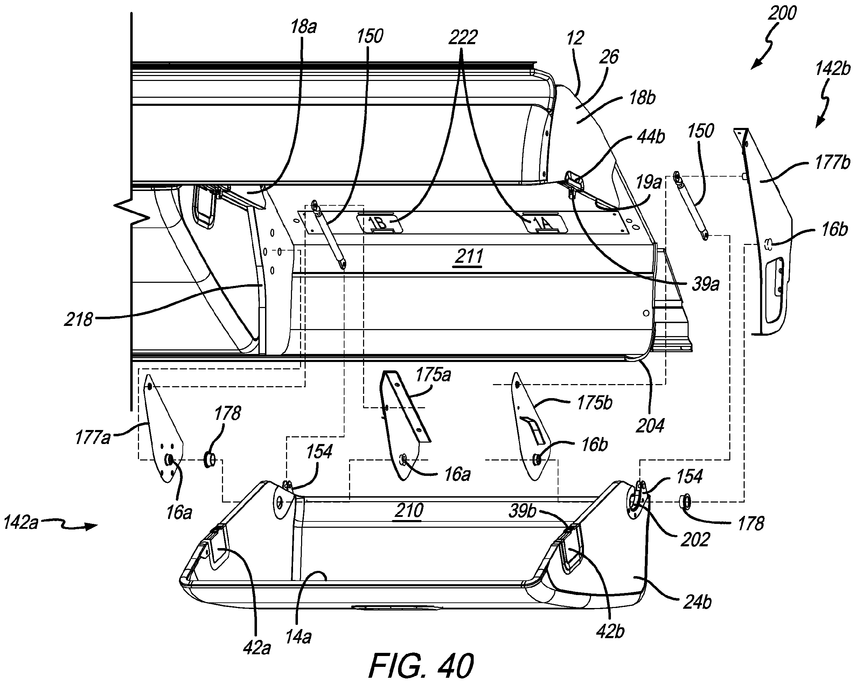

As shown in FIG. 40, in an example where two pivot bin assemblies 200 are part of a dual pivot bin assembly, a center side panel 218 is included. Preferably, outer plate 177a is connected to the center side panel 218, as depicted by the dashed lines in FIG. 41. Outer plate 177b of the adjacent pivot bin assembly 200 (the one shown in the closed position in FIG. 41) is attached to the opposite side of the center side panel 218. In another example, the center side panel 218 is the outer plate 177a and/or 177b of the clevis.

As shown in FIG. 41, in a preferred example, the clevis assembly includes a pivot mechanism or pivot axle 16b that is comprised of two halves or protrusions that extend from the inner and out plates 175b and 177b, that are secured together with a threaded fastener 220 or the like and are received in a bushing 178, which is received in the slot 202 and opening 202a in the side 24b of the bucket 14. This explanation applies for clevis assembly 142a as well. However, this is not a limitation and the clevis assembly and/or pivot axle can be any described herein.

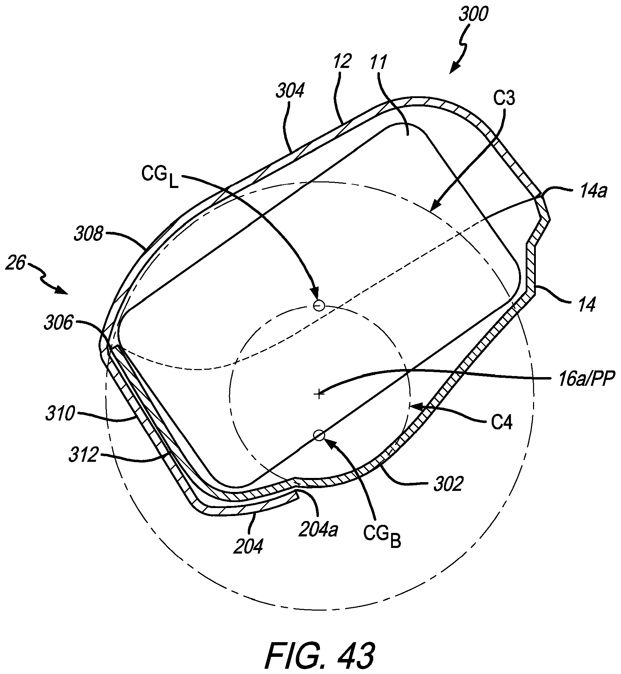

FIGS. 43-49 show an embodiment of a pivot bin assembly 300 that, in a preferred embodiment, provides for lower closing forces or hand loads when compared to the prior art. Like numerals in FIGS. 43-49 refer to like components in FIGS. 1-42. Furthermore, FIGS. 43-49 are schematic and do not show all the details of the pivot bin assembly 300. It will be appreciated that pivot bin assembly 300 can include any of the features of the other pivot bin assemblies described herein, including, for example, using clevis assemblies to pivotally attach the bucket to the upper housing.

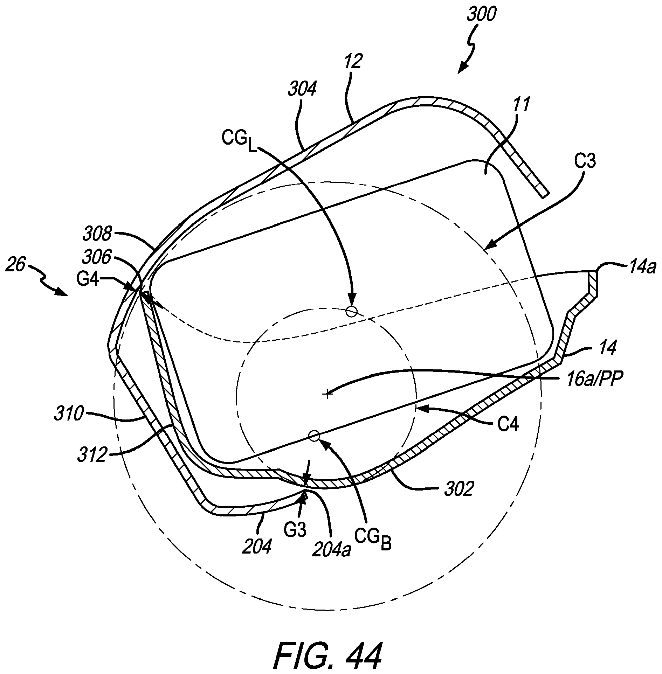

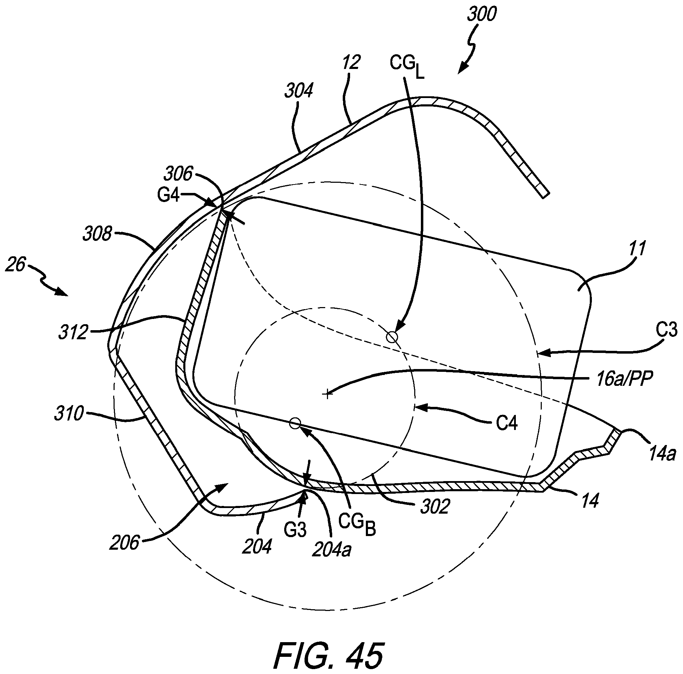

Generally, the present invention includes a bucket 14 that is pivotably connected to an upper housing 26 along a pivot axis or pivot point 16a. FIGS. 43, 46 and 48 show the bucket in the closed position, FIG. 44 shows the bucket in a partially closed or partially open position, and FIGS. 45, 47 and 49 show the bucket in the open position.

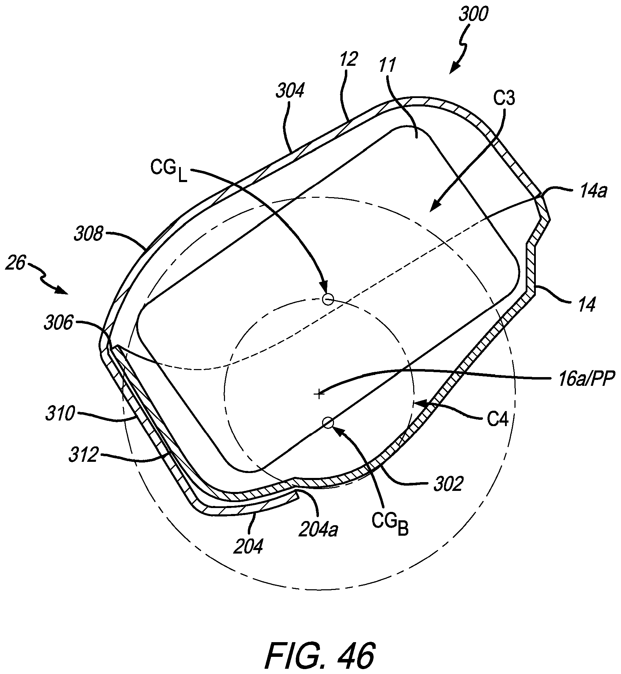

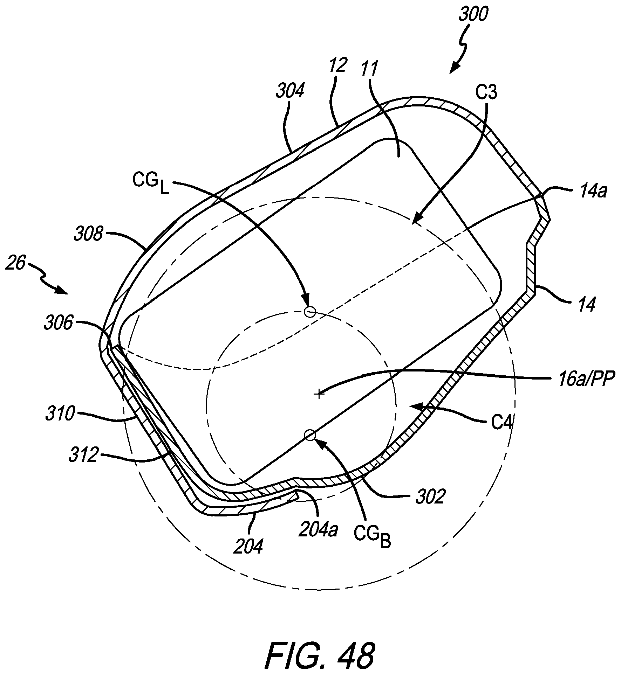

As shown in FIGS. 43, 46 and 48, in a preferred embodiment, the bucket 14 is configured such that the center of gravity of the bucket CG_{B} is positioned under the pivot point PP when the bucket is in the closed position. The center of gravity of the bucket CG_{B} may be directly under the pivot point PP (i.e., aligned vertically with the pivot point), as shown in FIG. 43 or it may be at another position below the pivot point PP (e.g., offset with respect to or from the vertical). For example, FIG. 46 shows the center of gravity of the bucket CG_{B} offset toward the bin front opening (inboard in a narrow body aircraft) and FIG. 48 shows the center of gravity of the bucket CG_{B} offset away from the bin front opening (outboard in a narrow body aircraft). Furthermore, in the configuration shown in FIGS. 43, 46 and 48, the center of gravity of any bags or luggage CG_{L} in the bucket 14 is above the pivot point PP. It also may be directly above the pivot point PP (i.e., aligned vertically with the pivot point), as shown in FIG. 43 or at another position above the PP (e.g., offset with respect to or from the vertical). For example, FIG. 46 shows the center of gravity of the luggage CG_{L} offset away from the bin front opening (inboard in a narrow body aircraft) and FIG. 48 shows the center of gravity of the luggage CG_{L} offset away from the bin front opening (inboard in a narrow body aircraft). In another embodiment, the center of gravity of the luggage CG_{L} can be offset toward the bin opening (but above the pivot point PP) and the center of gravity of the bucket CG_{L} can be offset away from the bin opening (but below the pivot point PP). In another embodiment, the center of gravity of the luggage CG_{L} can be offset away from the bin opening (but above the pivot point PP) and the center of gravity of the bucket CG_{B} can be offset toward the bin opening (but below the pivot point PP).

In the embodiment shown in FIGS. 43-45, when the bucket 14 is moved to the open position, the center of gravity of the luggage CG_{L} moves forward or inboard of the pivot point PP and the center of gravity of the bucket CG_{B} moves rearward or outboard of the pivot point PP.

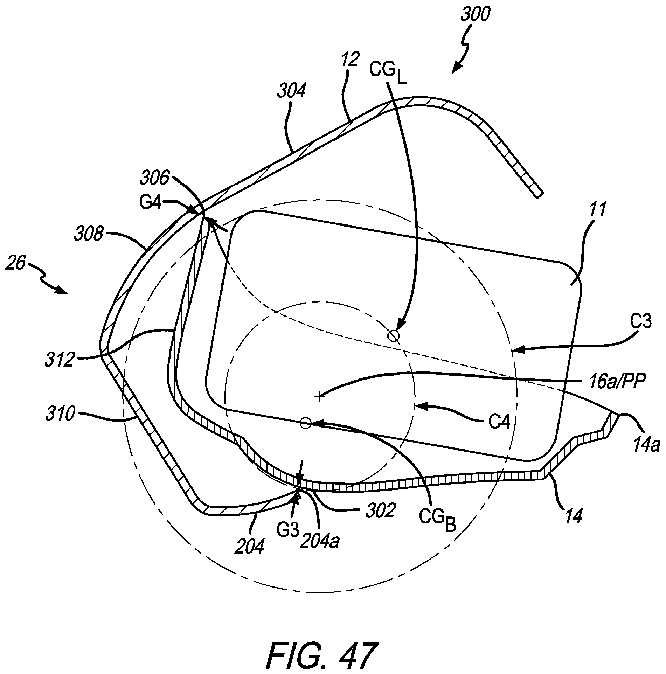

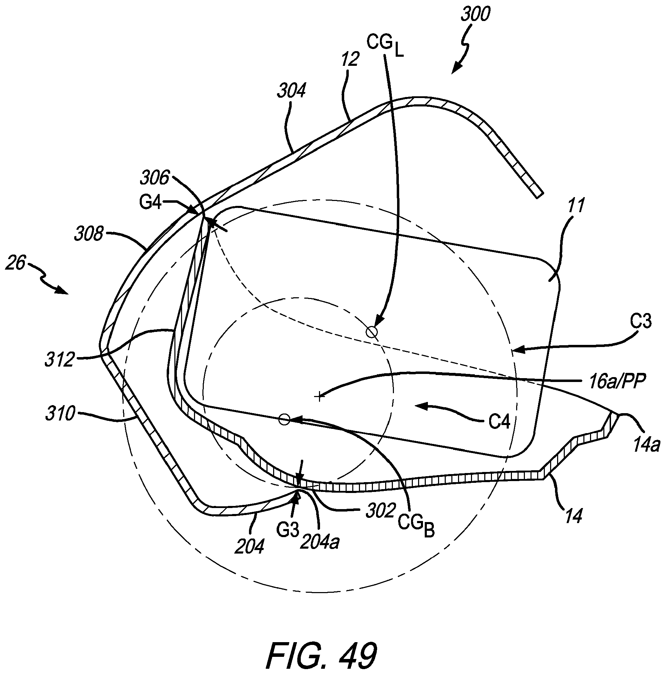

In the embodiments shown in FIGS. 46-49, when the bucket 14 is moved to the open position, the center of gravity of the luggage CG_{L} and the center of gravity of the bucket CG_{B} move as shown in FIGS. 47 and 49.

These arrangement of the centers of gravity of the luggage and bucket with the pivot point reduces the forces required by to close the bucket when compared to the prior art. If the center of gravity of the bucket is positioned toward the opening with respect to the pivot point, the bucket will tend to remain opened with no load therein and with no assistance mechanisms. If the center of gravity of the bucket is positioned away from the opening with respect to the pivot point, the bucket will tend to remain closed with no load therein and with no assistance mechanisms.

In a preferred embodiment, the upper housing 26 includes an extension member 204 that extends inwardly therefrom. When the bucket 14 is in the closed position, the extension member 204 defines an opening space 206 that receives a portion of the bucket 14 when the bucket 14 is pivoted to the open position, as shown in FIG. 45. The extension member 204 also includes a front edge 204a that defines a gap G3 with a bulge portion 302 of the bucket 14. In use, gap G3 is sized to prevent users from placing fingers or other objects between the extension member 204 and the bucket 14, and, in particular, the bulge portion 302 of the bucket 14. In a preferred embodiment, the outer surface of the bulge portion 302 has a shape or moves along a path that defines or is an arc of a circle C3 having the pivot point PP as its center. The front edge 204a (which is stationary) is positioned so that the gap G3 maintains substantially the same dimension when moving the bucket from the closed to the open position. In other words, the distance or clearance between the front edge 204a of the extension portion 204 and the outer surface of the bulge portion 302 of the bucket 14 in the open position is approximately the same as the distance or clearance between the front edge 204a of the extension portion 204 and the outer surface of the bulge portion 302 of the bucket 14 in the closed position. It will be appreciated that the gap clearance may change slightly throughout movement between the open and closed position, but that the general goal of the gap not being wide enough to fit a finger, luggage strap, coat or other object therein is maintained.

As shown in FIGS. 44-45, 47 and 49, in a preferred embodiment, gap control is provided between the upper rear edge 306 of the bucket 14 and the inner surface of the top portion 304 of the upper housing 26. In use, a gap G4 is provided and sized to prevent users from placing fingers or other objects (luggage, coats, etc.) between the upper rear edge 306 of the bucket 14 and the top portion 304 of the upper housing 26. In a preferred embodiment, the top portion 304 of the upper housing includes a bulge portion 308. The upper rear edge 306 of the bucket 14 moves along a path that defines or is an arc of a circle C4 having the pivot point PP as its center. The bulge portion 308 (which is stationary) has an inner surface that is shaped so that the gap G4 maintains substantially the same dimension when moving the bucket from the closed to the open position. In other words, the distance or clearance between the upper rear edge 306 of the bucket 14 and the inner surface of the bulge portion 308 of the top portion 304 in the open position is approximately the same as the distance or clearance between the upper rear edge 306 of the bucket 14 and the inner surface of the bulge portion 308 of the top portion 304 in the closed position. It will be appreciated that the gap clearance may change slightly throughout movement between the open and closed position, but that the general goal of the gap not being wide enough to fit a finger, luggage strap, coat or other object therein is maintained.

In a preferred embodiment, the rear portion 310 of the upper housing is generally straight or flat and the rear portion 312 of the bucket is generally straight or flat. However, this is not a limitation on the present invention.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description of the Preferred Embodiments using the singular or plural number may also include the plural or singular number respectively. The word "or" in reference to a list of two or more items, covers all of the following interpretations of the word: any of the items in the list, all of the items in the list, and any combination of the items in the list.

The above-detailed description of embodiments of the disclosure is not intended to be exhaustive or to limit the teachings to the precise form disclosed above. While specific embodiments of and examples for the disclosure are described above for illustrative purposes, various equivalent modifications are possible within the scope of the disclosure, as those skilled in the relevant art will recognize. Further, any specific numbers noted herein are only examples: alternative implementations may employ differing values, measurements or ranges.

The teachings of the disclosure provided herein can be applied to other systems, not necessarily the system described above. The elements and acts of the various embodiments described above can be combined to provide further embodiments. Any measurements or dimensions described or used herein are merely exemplary and not a limitation on the present invention. Other measurements or dimensions are within the scope of the invention.

These and other changes can be made to the disclosure in light of the above Detailed Description of the Preferred Embodiments. While the above description describes certain embodiments of the disclosure, and describes the best mode contemplated, no matter how detailed the above appears in text, the teachings can be practiced in many ways. Details of the system may vary considerably in its implementation details, while still being encompassed by the subject matter disclosed herein. As noted above, particular terminology used when describing certain features or aspects of the disclosure should not be taken to imply that the terminology is being redefined herein to be restricted to any specific characteristics, features or aspects of the disclosure with which that terminology is associated. In general, the terms used in the following claims should not be construed to limit the disclosures to the specific embodiments disclosed in the specification unless the above Detailed Description of the Preferred Embodiments section explicitly defines such terms. Accordingly, the actual scope of the disclosure is limited by the scope defined by the claims.

## Claims

1. An aircraft storage bin comprising:
an upper housing (26), and
a bucket (14) pivotally connected to the upper housing (26) that cooperates with the upper housing (26) to define a bin interior (36), wherein the bucket (14) includes a bottom (28), a front edge (28a), and first and second opposing side walls (24a, 24b) extending upwardly from the bottom (28), wherein the bucket (14) pivots about a pivot axis (A1) with respect to the upper housing (26) between an open position and a closed position; wherein the bucket (14) includes a center of gravity (CG_{B}) positioned below the pivot axis (A1) when the bucket (14) is in the closed position;
wherein the upper housing (26) includes a top portion (304) that includes a first bulge portion (308) extending outwardly therefrom and the bucket (14) includes an upper rear edge (306) positioned adjacent the first bulge portion (308);
wherein the first bulge portion (308) has an inner surface having a first curvature and the upper rear edge (306) of the bucket (14) moves along a path having a second curvature;
wherein when the bucket (14) pivots to the open position a clearance (G4) defined between the first bulge portion (308) and the path of the upper rear edge (306) remains the same;
wherein the aircraft storage bin includes an extension portion (204) extending downwardly and inwardly from the upper housing (26);
wherein the extension portion (204) and the rear edge (310) of the bucket (14) define an opening space (206);
wherein the bucket (14) moves into the opening space (206) when it is moved to the open position;
wherein the bottom (28) of the bucket (14) includes a second bulge portion (302) extending outwardly therefrom;
wherein the extension portion (204) includes a front edge (204a) positioned adjacent the second bulge portion (302) when the bucket (14) is in the closed position and defines a clearance (G3) with the second bulge portion (302); and
wherein when the bucket (14) pivots to the open position the clearance (G4) between the front edge (204a) of the extension portion (204) and the second bulge portion (302) remains the same.

2. The aircraft storage bin of claim 1 wherein when a standard piece of luggage having a center of gravity (CG_{L}) is placed in the bucket (14), the center of gravity (CG_{L}) of the piece of luggage is positioned above the pivot axis (A1).

3. The aircraft storage bin of claim 1 wherein the center of gravity (CG_{B}) of the bucket (14) is not in vertical alignment with the pivot axis (A1).

4. The aircraft storage bin of claim 1 wherein the center of gravity (CG_{B}) of the bucket (14) is positioned between the pivot axis (A1) and the front edge of the bucket (14a).

5. The aircraft storage bin of claim 1 wherein the pivot axis (A1) is positioned between the center of gravity (CG_{B}) of the bucket (14) and the front edge (14a) of the bucket (14).

6. The aircraft storage bin of claim 2 wherein the center of gravity (CG_{B}) of the bucket (14) is not in vertical alignment with the pivot axis (A1), and wherein the center of gravity (CG_{L}) of the luggage is not in vertical alignment with the pivot axis (A1).

7. The aircraft storage bin of claim 2 wherein the center of gravity (CG_{B}) of the bucket (14) is positioned between the pivot axis (A1) and the front edge (14a) of the bucket (14), and wherein the center of gravity (CG_{L}) of the luggage is positioned between the pivot axis (A1) and the front edge of the bucket (14).

8. The aircraft storage bin of claim 2 wherein the pivot axis (A1) is positioned between the center of gravity (CG_{B}) of the bucket (14) and the front edge (14a) of the bucket (14), and wherein the pivot axis (A1) is positioned between the center of gravity of the luggage (CG_{L}) and the front edge (14a) of the bucket(14).

9. The aircraft storage bin of claim 1 further comprising a first pivot mechanism (16a) operatively associated with the first side wall (24a) of the bucket (14) and a second pivot mechanism (16b) operatively associated with the second side wall (24b) of the bucket (14), wherein the first side wall (24a) of the bucket (14) defines a first arcuate slot (202) therein and the second side wall (b) of the bucket (14) defines a second arcuate slot (202) therein, and wherein the first arcuate slot (202) receives the first pivot mechanism (16a) and the second arcuate slot (202) receives the second pivot mechanism (16b).

10. The aircraft storage bin of claim 9 wherein the first and second arcuate slots (202) are open to a top edge (25a, 25b) of the first and second side walls (24a, 24b) of the bucket (14).

11. The aircraft storage bin of claim 1 wherein the first curvature defines a first circle having the pivot axis (A1) as an approximate center point, and wherein the second curvature defines a second circle having the pivot axis (A1) as a center point.

12. The aircraft storage bin of claim 1, wherein the second bulge portion (302) has an outer surface, and wherein the outer surface defines a second circle (C4) having the pivot axis (A1) as a center point.

13. The aircraft storage bin of claim 1 further comprising a first pivot mechanism (16a) operatively associated with the first side wall (24a) of the bucket (14), and a second pivot mechanism (16b) operatively associated with the second side wall (24b) of the bucket (14), wherein the upper housing (26) includes first and second side panels (18a, 18b) that each include a bottom edge (19a, 19b), wherein the first and second side walls (24a, 24b) of the bucket (14) each include a top edge (25a, 25b), and wherein, in the closed position, at least a portion of the top edge (25a) of the first side wall (24a) of the bucket (14) abuts the bottom edge (19a) of the first side panel (18a), and at least a portion of the top edge (25b) of the second side wall (24b) of the bucket (14) abuts the bottom edge (19b) of the second side panel (18b); and, optionally,
wherein the aircraft storage bin further comprises a first clevis assembly (142a) that includes at least one of a first inner plate (175a) and a first outer plate (177a), wherein the storage bin further comprises a second clevis (142b) assembly that includes at least one of a second inner plate (175b) and a second outer plate (177b), wherein the first clevis assembly (142a) is secured to and extends downwardly from the first side panel (18a) and the second clevis assembly (142b) is secured to and extends downwardly from the second side panel (18b), and wherein the first pivot mechanism (16a) is operatively associated with the first clevis assembly (142a) and the second pivot mechanism (16b) is operatively associated with the second clevis assembly (142b).

14. The aircraft storage bin of claim 1 further comprising first and second latch assemblies (40a, 40b), wherein the first latch assembly (40a) is associated with the first side panel (18a) and the first side wall (24a) of the bucket (14), and wherein the second latch assembly (40b) is associated with the second side panel (18b) and the second side wall (24b) of the bucket (14).

15. The aircraft storage bin of claim 14 wherein the first latch assembly (40a) includes a first hook portion (42a) and a first striker portion (44a), wherein one of the first hook portion (42a) and the first striker portion (44a) is associated with the first side panel (18a) and the other of the first hook portion (42a) and the first striker portion (44a) is associated with the first side wall (24a) of the bucket (14), wherein the second latch assembly (40b) includes a second hook portion (42b) and a second striker portion (44b), wherein one of the second hook portion (42b) and the second striker portion (44b) is associated with the second side panel (18b) and the other of the second hook portion (42b) and the second striker portion (44b) is associated with the second side wall (24b) of the bucket (14); and, optionally,
wherein one of the first hook portion (42a) and the first striker portion (44a) extends downwardly from the bottom edge (19a) of the first side panel (18a) or upwardly from the first side wall (24a) of the bucket (14), and the other of the first hook portion (42a) and the first striker portion (44a) is positioned in a first recess (41a) defined in the top edge (25a) of the first side wall (24a) of the bucket (14) or the bottom edge (19a) of the first side panel (18a), and wherein the second latch assembly (40b) includes a second hook portion (42b) and a second striker portion (44b), wherein one of the second hook portion (42b) and the second striker portion (44b) extends downwardly from the bottom edge (19a) of the first side panel (18a) or upwardly from the second side wall (24b) of the bucket (14) and the other of the second hook portion (42b) and the second striker portion (44b) is positioned in a first recess (41a) defined in the top edge (25a) of the first side wall (24a) of the bucket (14) or the bottom edge (19a) of the first side panel (18a).

## Patentansprüche

1. Luftfahrzeug -Ablagebehälter, der Folgendes umfasst:
ein oberes Gehäuse (26) und
eine schwenkbar mit dem oberen Gehäuse (26) verbundene Wanne (14), die mit dem oberen Gehäuse (26) zusammenwirkt, um ein Behälterinneres (36) zu definieren, wobei die Wanne (14) einen Boden (28), eine vordere Kante (28a) und eine erste und eine gegenüberliegende zweite Seitenwand (24a, 24b), die sich von dem Boden (28) aus nach oben erstrecken, einschließt, wobei die Wanne (14) um eine Schwenkachse (A1) in Bezug auf das obere Gehäuse (26) zwischen einer offenen Stellung und einer geschlossenen Stellung schwenkt, wobei die Wanne (14) einen Schwerpunkt (CG_{B}) einschließt, der unterhalb der Schwenkachse (A1) angeordnet ist, wenn sich die Wanne (14) in der geschlossenen Stellung befindet,
wobei das obere Gehäuse (26) einen oberen Abschnitt (304) einschließt, der einen ersten Wölbungsabschnitt (308) einschließt, der sich von demselben aus nach außen erstreckt, und die Wanne (14) eine obere hintere Kante (306) einschließt, die angrenzend an den ersten Wölbungsabschnitt (308) angeordnet ist,
wobei der erste Wölbungsabschnitt (308) eine Innenfläche aufweist, die eine erste Krümmung aufweist, und sich die obere hintere Kante (306) der Wanne (14) entlang einer Bahn bewegt, die eine zweite Krümmung aufweist,
wobei, wenn die Wanne (14) zu der offenen Stellung schwenkt, ein Abstand (G4), der zwischen dem ersten Wölbungsabschnitt (308) und der Bahn der oberen hinteren Kante (306) definiert wird, der gleiche bleibt,
wobei der Luftfahrzeug-Ablagebehälter einen Erweiterungsabschnitt (204) einschließt, der sich von dem oberen Gehäuse (26) aus nach unten und nach innen erstreckt,
wobei der Erweiterungsabschnitt (204) und die hintere Kante (310) der Wanne (14) einen Öffnungsraum (206) definieren,
wobei sich die Wanne (14) in den Öffnungsraum (206) bewegt, wenn sie zu der offenen Stellung bewegt wird,
wobei der Boden (28) der Wanne (14) einen zweiten Wölbungsabschnitt (302) einschließt, der sich von demselben aus nach außen erstreckt,
wobei der Erweiterungsabschnitt (204) eine vordere Kante (204a) einschließt, die angrenzend an den zweiten Wölbungsabschnitt (302) angeordnet ist, wenn sich die Wanne (14) in der geschlossenen Stellung befindet, und einen Abstand (G3) mit dem zweiten Wölbungsabschnitt (302) definiert, und
wobei, wenn die Wanne (14) zu der offenen Stellung schwenkt, der Abstand (G4) zwischen der vorderen Kante (204a) des Erweiterungsabschnitts (204) und dem zweiten Wölbungsabschnitt (302) der gleiche bleibt.

2. Luftfahrzeug-Ablagebehälter nach Anspruch 1, wobei, wenn ein standardmäßiges Gepäckstück, das einen Schwerpunkt (CG_{L}) aufweist, in die Wanne (14) platziert wird, der Schwerpunkt (CG_{L}) des Gepäckstücks oberhalb der Schwenkachse (A1) angeordnet ist.

3. Luftfahrzeug-Ablagebehälter nach Anspruch 1, wobei sich der Schwerpunkt (CG_{B}) der Wanne (14) nicht in vertikaler Ausrichtung mit der Schwenkachse (A1) befindet.

4. Luftfahrzeug-Ablagebehälter nach Anspruch 1, wobei der Schwerpunkt (CG_{B}) der Wanne (14) zwischen der Schwenkachse (A1) und der vorderen Kante (14a) der Wanne angeordnet ist.

5. Luftfahrzeug-Ablagebehälter nach Anspruch 1, wobei die Schwenkachse (A1) zwischen dem Schwerpunkt (CG_{B}) der Wanne (14) und der vorderen Kante (14a) der Wanne (14) angeordnet ist.

6. Luftfahrzeug-Ablagebehälter nach Anspruch 2, wobei sich der Schwerpunkt (CG_{B}) der Wanne (14) nicht in vertikaler Ausrichtung mit der Schwenkachse (A1) befindet und wobei sich der Schwerpunkt (CG_{L}) des Gepäcks nicht in vertikaler Ausrichtung mit der Schwenkachse (A1) befindet.

7. Luftfahrzeug-Ablagebehälter nach Anspruch 2, wobei der Schwerpunkt (CG_{B}) der Wanne (14) zwischen der Schwenkachse (A1) und der vorderen Kante (14a) der Wanne (14) angeordnet ist und wobei der Schwerpunkt (CG_{L}) des Gepäcks zwischen der Schwenkachse (A1) und der vorderen Kante der Wanne (14) angeordnet ist.

8. Luftfahrzeug-Ablagebehälter nach Anspruch 2, wobei die Schwenkachse (A1) zwischen dem Schwerpunkt (CG_{B}) der Wanne (14) und der vorderen Kante (14a) der Wanne (14) angeordnet ist und wobei die Schwenkachse (A1) zwischen dem Schwerpunkt (CG_{L}) des Gepäcks und der vorderen Kante (14a) der Wanne (14) angeordnet ist.

9. Luftfahrzeug-Ablagebehälter nach Anspruch 1, der ferner einen ersten Schwenkmechanismus (16a), der wirksam mit der ersten Seitenwand (24a) der Wanne (14) verknüpft ist, und einen zweiten Schwenkmechanismus (16b), der wirksam mit der zweiten Seitenwand (24b) der Wanne (14) verknüpft ist, umfasst, wobei die erste Seitenwand (24a) der Wanne (14) einen ersten bogenförmigen Schlitz (202) in derselben definiert und die zweite Seitenwand (24b) der Wanne (14) einen zweiten bogenförmigen Schlitz (202) in derselben definiert und wobei der erste bogenförmige Schlitz (202) den ersten Schwenkmechanismus (16a) aufnimmt und der zweite bogenförmige Schlitz (202) den zweiten Schwenkmechanismus (16b) aufnimmt.

10. Luftfahrzeug-Ablagebehälter nach Anspruch 9, wobei der erste und der zweite bogenförmige Schlitz (202) zu einer oberen Kante (25a, 25b) der ersten und der zweiten Seitenwand (24a, 24b) der Wanne (14) offen sind.

11. Luftfahrzeug-Ablagebehälter nach Anspruch 1, wobei die erste Krümmung einen ersten Kreis definiert, der die Schwenkachse (A1) als ungefähren Mittelpunkt hat, und wobei die zweite Krümmung einen zweiten Kreis definiert, der die Schwenkachse (A1) als Mittelpunkt hat.

12. Luftfahrzeug-Ablagebehälter nach Anspruch 1, wobei der zweite Wölbungsabschnitt (302) eine Außenfläche aufweist und wobei die Außenfläche einen zweiten Kreis (C4) definiert, der die Schwenkachse (A1) als Mittelpunkt hat.

13. Luftfahrzeug-Ablagebehälter nach Anspruch 1, der ferner einen ersten Schwenkmechanismus (16a), der wirksam mit der ersten Seitenwand (24a) der Wanne (14) verknüpft ist, und einen zweiten Schwenkmechanismus (16b), der wirksam mit der zweiten Seitenwand (24b) der Wanne (14) verknüpft ist, umfasst, wobei das obere Gehäuse (26) eine erste und eine zweite Seitentafel (18a, 18b) einschließt, die jeweils eine untere Kante (19a, 19b) einschließen, wobei die erste und die zweite Seitenwand (24a, 24b) der Wanne (14) jeweils eine obere Kante (25a, 25b) einschließen und wobei, in der geschlossenen Stellung, mindestens ein Abschnitt der oberen Kante (25a) der ersten Seitenwand (24a) der Wanne (14) an die untere Kante (19a) der ersten Seitentafel (18a) anstößt und mindestens ein Abschnitt der oberen Kante (25b) der zweiten Seitenwand (24b) der Wanne (14) an die untere Kante (19b) der zweiten Seitentafel (18b) anstößt, und, wahlweise,
wobei der Luftfahrzeug-Ablagebehälter ferner eine erste Gabelkopfbaugruppe (142a) umfasst, die mindestens eines von einer ersten inneren Platte (175a) und einer ersten äußeren Platte (177a) einschließt, wobei der Ablagebehälter ferner eine zweite Gabelkopfbaugruppe (142b) umfasst, die mindestens eines von einer zweiten inneren Platte (175b) und einer zweiten äußeren Platte (177b) einschließt, wobei die erste Gabelkopfbaugruppe (142a) an der ersten Seitentafel (18a) befestigt ist und sich von derselben aus nach unten erstreckt und die zweite Gabelkopfbaugruppe (142b) an der zweiten Seitentafel (18b) befestigt ist und sich von derselben aus nach unten erstreckt und wobei der erste Schwenkmechanismus (16a) wirksam mit der ersten Gabelkopfbaugruppe (142a) verknüpft ist und der zweite Schwenkmechanismus (16b) wirksam mit der zweiten Gabelkopfbaugruppe (142b) verknüpft ist.

14. Luftfahrzeug-Ablagebehälter nach Anspruch 1, der ferner eine erste und eine zweite Klinkenbaugruppe (40a, 40b) umfasst, wobei die erste Klinkenbaugruppe (40a) mit der ersten Seitentafel (18a) und der ersten Seitenwand (24a) der Wanne (14) verknüpft ist und wobei die zweite Klinkenbaugruppe (40b) mit der zweiten Seitentafel (18b) und der zweiten Seitenwand (24b) der Wanne (14) verknüpft ist.

15. Luftfahrzeug-Ablagebehälter nach Anspruch 14, wobei die erste Klinkenbaugruppe (40a) einen ersten Hakenabschnitt (42a) und einen ersten Schließplattenabschnitt (44a) einschließt, wobei der eine von dem ersten Hakenabschnitt (42a) und dem ersten Schließplattenabschnitt (44a) mit der ersten Seitentafel (18a) verknüpft ist und der andere von dem ersten Hakenabschnitt (42a) und dem ersten Schließplattenabschnitt (44a) mit der ersten Seitenwand (24a) der Wanne (14) verknüpft ist, wobei die zweite Klinkenbaugruppe (40b) einen zweiten Hakenabschnitt (42b) und einen zweiten Schließplattenabschnitt (44b) einschließt, wobei der eine von dem zweiten Hakenabschnitt (42b) und dem zweiten Schließplattenabschnitt (44b) mit der zweiten Seitentafel (18b) verknüpft ist und der andere von dem zweiten Hakenabschnitt (42b) und dem zweiten Schließplattenabschnitt (44b) mit der zweiten Seitenwand (24b) der Wanne (14) verknüpft ist, und, wahlweise,
wobei sich der eine von dem ersten Hakenabschnitt (42a) und dem ersten Schließplattenabschnitt (44a) von der unteren Kante (19a) der ersten Seitentafel (18a) aus nach unten oder von der ersten Seitenwand (24a) der Wanne (14) aus nach oben erstreckt und der andere von dem ersten Hakenabschnitt (42a) und dem ersten Schließplattenabschnitt (44a) in einer ersten Aussparung (41a) angeordnet ist, die in der oberen Kante (25a) der ersten Seitenwand (24a) der Wanne (14) oder der unteren Kante (19a) der ersten Seitentafel (18a) definiert ist, und wobei die zweite Klinkenbaugruppe (40b) einen zweiten Hakenabschnitt (42b) und einen zweiten Schließplattenabschnitt (44b) einschließt, wobei sich der eine von dem zweiten Hakenabschnitt (42b) und dem zweiten Schließplattenabschnitt (44b) von der unteren Kante (19a) der ersten Seitentafel (18a) aus nach unten oder von der zweiten Seitenwand (24b) der Wanne (14) aus nach oben erstreckt und der andere von dem zweiten Hakenabschnitt (42b) und dem zweiten Schließplattenabschnitt (44b) in einer ersten Aussparung (41a) angeordnet ist, die in der oberen Kante (25a) der ersten Seitenwand (24a) der Wanne (14) oder der unteren Kante (19a) der ersten Seitentafel (18a) definiert ist.

## Revendications

1. Compartiment de rangement d'aéronef, comprenant :
un boîtier supérieur (26) ; et
un bac (14) connecté de manière pivotante au boîtier supérieur (26), coopérant avec le boîtier supérieur (26) pour définir un intérieur du compartiment (36), dans lequel le bac (14) inclut un fond (28), un bord avant (28a) et des premières et deuxième parois latérales opposées (24a, 24b) s'étendant vers le haut à partir du fond (28), dans lequel le bac (14) pivote autour d'un axe de pivotement (A1) par rapport au boîtier supérieur (26) entre une position ouverte et une position fermée ; dans lequel le bac (14) inclut un centre de gravité (CG_{B}) positionné au-dessous de l'axe de pivotement (A1) lorsque le bac (14) se trouve dans la position fermée ;
dans lequel le boîtier supérieur (26) inclut une partie supérieure (304) incluant une première partie bombée (308) s'étendant vers l'extérieur de celui-ci, et le bac (14) inclut un bord arrière supérieur (306) positionné en un point adjacent à la première partie bombée (308) ;
dans lequel la première partie bombée (308) comporte une surface interne ayant une première courbure et le bord arrière supérieur (306) du bac (14) se déplace le long d'une voie ayant une deuxième courbure ;
dans lequel, lorsque le bac (14) pivote vers la position ouverte, un dégagement (G4) défini entre la première partie bombée (308) et la voie du bord arrière supérieur (306) reste le même ;
dans lequel le compartiment de rangement d'aéronef inclut une partie d'extension (204) s'étendant vers le bas et vers l'intérieur à partir du boîtier supérieur (26) ;
dans lequel la partie d'extension (204) et le bord arrière (310) du bac définissent un espace d'ouverture (206) ;
dans lequel le bac (14) se déplace dans l'espace d'ouverture (206) lors de son déplacement vers la position ouverte ;
dans lequel le fond (28) du bac (14) inclut une deuxième partie bombée (302) s'étendant vers l'extérieur de celui-ci ;
dans lequel la partie d'extension (204) inclut un bord avant (204a) positionné de manière adjacente à la deuxième partie bombée (302) lorsque le bac (14) se trouve dans la position fermée et définit un dégagement (G3) avec la deuxième partie bombée (302) ; et
dans lequel, lorsque le bac (14) pivote vers la position ouverte, le dégagement (G4) entre le bord avant (204a) de la partie d'extension (204) et la deuxième partie bombée (302) reste le même.

2. Compartiment de rangement d'aéronef selon la revendication 1, dans lequel, lorsqu'une pièce de bagage standard ayant un centre de gravité (CG_{L}) est placée dans le bac (14), le centre de gravité (CG_{L}) de la pièce de bagage est positionné au-dessus de l'axe de pivotement (A1).

3. Compartiment de rangement d'aéronef selon la revendication 1, dans lequel le centre de gravité (CG_{B}) du bac (14) n'est pas aligné verticalement avec l'axe de pivotement (A1).

4. Compartiment de rangement d'aéronef selon la revendication 1, dans lequel le centre de gravité (CG_{B}) du bac (14) est positionné entre l'axe de pivotement (A1) et le bord avant (14a) du bac (14).

5. Compartiment de rangement d'aéronef selon la revendication 1, dans lequel l'axe de pivotement (A1) est positionné entre le centre de gravité (CG_{B}) du bac (14) et le bord avant (14a) du bac (14).

6. Compartiment de rangement d'aéronef selon la revendication 2, dans lequel le centre de gravité (CG_{B}) du bac (14) n'est pas aligné verticalement avec l'axe de pivotement (A1), et dans lequel le centre de gravité (CG_{L}) du bagage n'est pas aligné verticalement avec l'axe de pivotement (A1).

7. Compartiment de rangement d'aéronef selon la revendication 2, dans lequel le centre de gravité (CG_{B}) du bac (14) est positionné entre l'axe de pivotement (A1) et le bord avant (14a) du bac (14), et dans lequel le centre de gravité (CG_{L}) du bagage est positionné entre l'axe de pivotement (A1) et le bord avant du bac (14).

8. Compartiment de rangement d'aéronef selon la revendication 2, dans lequel l'axe de pivotement (A1) est positionné entre le centre de gravité (CG_{B}) du bac (14) et le bord avant (14a) du bac (14), et dans lequel l'axe de pivotement (A1) est positionné entre le centre de gravité (CG_{L}) du bagage et le bord avant (14a) du bac (14).

9. Compartiment de rangement d'aéronef selon la revendication 1, comprenant en outre un premier mécanisme de pivotement (16a) associé de manière opérationnelle à la première paroi latérale (24a) du bac (14), et un deuxième mécanisme de pivotement (16b) associé de manière opérationnelle à la deuxième paroi latérale (24b) du bac (14), dans lequel la première paroi latérale (24a) du bac (14) définit une première fente arquée (202) et la deuxième paroi latérale (24b) du bac (14) définit une deuxième fente arquée (202), et dans lequel la première fente arquée (202) reçoit le premier mécanisme de pivotement (16a) et la deuxième fente arquée (202) reçoit le deuxième mécanisme de pivotement (16b).

10. Compartiment de rangement d'aéronef selon la revendication 9,
dans lequel les première et deuxième fentes arquées (202) sont ouvertes vers un bord supérieur (25a, 25b) des première et deuxième parois latérales (24a, 24b) du bac (14).

11. Compartiment de rangement d'aéronef selon la revendication 1, dans lequel la première courbure définit un premier cercle comportant l'axe de pivotement (A1) comme point central approximatif, et dans lequel la deuxième courbure définit un deuxième cercle ayant l'axe de pivotement (A1) comme point central.

12. Compartiment de rangement d'aéronef selon la revendication 1, dans lequel la deuxième partie bombée (302) comporte une surface externe, et dans lequel la surface externe définit un deuxième cercle (C4) ayant l'axe de pivotement (A1) comme point central.

13. Compartiment de rangement d'aéronef selon la revendication 1, comprenant en outre un premier mécanisme de pivotement (16a) associé de manière opérationnelle à la première paroi latérale (24a) du bac (14), et un deuxième mécanisme de pivotement (16b) associé de manière opérationnelle à la deuxième paroi latérale (24b) du bac (14), dans lequel le boîtier supérieur (26) inclut des premier et deuxième panneaux latéraux (18a, 18b) incluant chacun un bord inférieur (19a, 19b), dans lequel les première et deuxième parois latérales (24a, 24b) du bac (14) incluent chacune un bord supérieur (25a, 25b), et dans lequel, dans la position fermée, au moins une partie du bord supérieur (25a) de la première paroi latérale (24a) du bac (14) bute contre le bord inférieur (19a) du premier panneau latéral (18a) et au moins une partie du bord supérieur (25b) de la deuxième paroi latérale (24b) du bac (14) bute contre le bord inférieur (19b) du deuxième panneau (18b) ; et, optionnellement :
dans lequel le compartiment de rangement d'aéronef comprend en outre un premier ensemble d'étrier (142a) qui inclut au moins l'une d'une première plaque interne (175a) et d'une première plaque externe (177a), dans lequel le compartiment de rangement comprend en outre un deuxième ensemble d'étrier (142b) qui inclut au moins l'une d'une deuxième plaque interne (175b) et d'une deuxième plaque externe (177b), dans lequel le premier ensemble d'étrier (142a) est fixé sur le premier panneau latéral (18a) et s'étend vers le bas de celui-ci, et le deuxième ensemble d'étrier (142b) est fixé sur le deuxième panneau latéral (18b) et s'étend vers le bas de celui-ci, et dans lequel le premier mécanisme de pivotement (16a) est associé de manière opérationnelle au premier ensemble d'étrier (142a) et le deuxième ensemble d'étrier (16b) est associé de manière opérationnelle au deuxième ensemble d'étrier (142b).

14. Compartiment de rangement d'aéronef selon la revendication 1, comprenant en outre des premier et deuxième ensembles de verrouillage (40a, 40b), dans lequel le premier ensemble de verrouillage (40a) est associé au premier panneau latéral (18a) et à la première paroi latérale (24a) du bac (14), et dans lequel le deuxième ensemble de verrouillage (40b) est associé au deuxième panneau latéral (18b) et à la deuxième paroi latérale (24b) du bac (14).

15. Compartiment de rangement d'aéronef selon la revendication 14, dans lequel le premier ensemble de verrouillage (40a) inclut une première partie de crochet (42a) et une première partie de gâche (44a), dans lequel l'une de la première partie de crochet (42a) et de la première partie de gâche (44a) est associée au premier panneau latéral (18a) et l'autre de la première partie de crochet (42a) et de la première partie de gâche (44a) est associée à la première paroi latérale (24a) du bac (14), dans lequel le deuxième ensemble de verrouillage (40b) inclut une deuxième partie de crochet (42b) et une deuxième partie de gâche (44b), dans lequel l'une de la deuxième partie de crochet (42b) et de la deuxième partie de gâche (44b) est associée au deuxième panneau latéral (18b) et l'autre de la deuxième partie de crochet (42b) et de la deuxième partie de gâche (44b) est associée à la deuxième paroi latérale (24b) du bac (14) ; et, optionnellement :
dans lequel l'une de la première partie de crochet (42a) et de la première partie de gâche (44a) s'étend vers le bas à partir du bord inférieur (19a) du premier panneau latéral (18a) ou vers le haut à partir de la première paroi latérale (24a) du bac (14), et l'autre de la première partie de crochet (42a) et de la première partie de gâche (44a) est positionnée dans un premier évidement (41a) défini dans le bord supérieur (25a) de la première paroi latérale (24a) du bac (14) ou dans le bord inférieur (19a) du premier panneau latéral (18a), et dans lequel le deuxième ensemble de verrouillage (40b) inclut une deuxième partie de crochet (42b) et une deuxième partie de gâche (44b), dans lequel l'une de la deuxième partie de crochet (42b) et de la deuxième partie de gâche (44b) s'étend vers le bas à partir du bord inférieur (19a) du premier panneau latéral (18a) ou vers le haut à partir de la deuxième paroi latérale (24b) du bac (14), et l'autre de la deuxième partie de crochet (42b) et de la deuxième partie de gâche (44b) est positionnée dans un premier évidement (41a) défini dans le bord supérieur (25a) de la première paroi latérale (24a) du bac (14) ou dans le bord inférieur (19a) du premier panneau latéral (18a).
